# EUROPEAN PATENT SPECIFICATION

(11) **EP 3 772 997 B1**
(45) Date of publication and mention of the grant of the patent: **11.09.2024**
(21) Application number: 19717977.3
(22) Date of filing: 22.03.2019
(51) Int. Cl.: A23L 7/109

(54) **SHELF-STABLE, READY-TO-EAT PASTA PRODUCTS AND METHODS OF PRODUCING SAME**
LAGERSTABILE, ESSFERTIGE TEIGWAREN UND VERFAHREN ZU DEREN HERSTELLUNG
PRODUITS DE PÂTES PRÊTS À CONSOMMER, DE LONGUE CONSERVATION, ET LEURS PROCÉDÉS DE PRODUCTION

(30) Priority: 03.04.2018 US 201862651849 P; 28.08.2018 US 201862723834 P
(43) Date of publication of application: 17.02.2021
(73) Proprietor: Société des Produits Nestlé S.A., 1800 Vevey (CH)
(72) Inventor: LOPEZ PENA, Cynthia Lyliam, Grand Rapids, Michigan 49503 (US); PETERSON, Scott David, Twin Lake, Michigan 49547 (US); LOH, Kaitlyn Yuk-Ting Nicole, Saint Louis Missouri 63116 (US)
(74) Representative: Loiseau, François Michel
(86) International application number: PCT/IB2019/052335
(87) International publication number: WO 2019/193446

(56) References cited:
- WO-A1-99/09841
- WO-A1-99/11146
- JP-A- S6 474 958
- GIAVEDONI P ET AL: "Beitrag zur Sicherheit und Haltbarkeit von frischen gefüllten Teigwaren, abgepackt in modifizierter und in einer Äthanol-Gas-Atmosphäre", FLEISCHWIRTSCHAFT, DT. FACHVERL, DE, vol. 74, no. 6, 1 January 1994 (1994-01-01), pages - 646, XP002091391, ISSN: 0015-363X

## Description

### TECHNICAL FIELD

The present invention relates to a method of making a shelf stable pasta product comprising the steps of blanching a pasta in acidified water, draining the pasta, rinsing the pasta, cooling the pasta, packaging the pasta in a sealed container, and thermal processing the sealed container containing the pasta. The pasta product does not have a pH ≤ 4.5. The acidified water uses acids at concentration of at least 0.05 % w/w and is selected from the group comprising lemon juice, lemon juice concentrate, distilled vinegar, acetic acid, or combinations thereof. The pasta contains no added acidulants, no added stabilizers, no added enzymes.

### BACKGROUND

Various methods of producing shelf-stable, ready-to-eat pasta products are currently known. Certain methods involve the use of the complete acidification of blanched pasta to a pH below 4.5 (see, for example, EPO Patent Nos. EP0807386 and EP0745331). Other methods involve the inclusion of additives in the raw materials or the final product. See, for example US Patent No. 4,552,772, which discloses the inclusion of salt during blanching; US Patent No. 2,005,026, which discloses the addition of soy protein and eggs to pasta; and International Patent Application Publication No. WO 99/02044, which discloses the addition of propylene alginate to pasta. Alternatively, other methods utilize enzymes that are added to the raw ingredients and/or included during processing in order to improve the characteristics of the final product. See, for example, US Patent Application Publication No. US 2006/0115567, which discloses the inclusion of oxidoreductase in the pasta formulation to improve hydration; and International Patent Application Publication No. WO 2008/01940, in which glycosyltransferase is added. In another alternative, EPO Patent No. EP0274891 discloses methods of making a fresh pasta and then processing it to be shelf-stable. In yet another alternative, multiple treatment steps (such as, but not limited to, multiple blanches, dipping in various acid baths, etc.) are utilized to achieve a suitable end product. See, for example, EPO Patent No. EP0968659, which discloses the step of dipping pasta into an acidified water bath after blanching; and EPO Patent No. EP0602953, which discloses subjecting a starchy product to a second heating and cooking stage that is acidified. WO 99/11146 A1 discloses shelf stable pasta products, the filled pasta is blanched in acidified water for 5 minutes, cooking the raw filled pasta in acidified water is done at a pH of from 4.6 to 5.6, the pasta products are packaged in sealed containers and said containers are processed thermally. Similarly, WO 99/09841 A1 describes filled shelf-stable pasta, thereby pasta is blanched in acidified water such as from 3-15 minutes, then the pasta is drained rinsed, cooled and finally packaged in a sealed container, the sealed container is further thermally processed, the acidified pasta has a pH of at least 4.6.

However, the currently available methods have various defects in their color, texture, flavor, and aromas due to the various processing steps discussed above. As such, new and improved methods of producing shelf-stable, ready-to-eat pasta products that possess color, texture, flavors, and aromas akin to homemade, high-quality pasta are desired.

It has been found that acidification of pasta noodles to a pH less than or equal to about 4.3 prior to a thermal processing step that includes retorting would generate products with a relatively high quality; however, some additional optimization of the product produced in this manner is still necessary. These additional optimization steps include: (i) complete acidification of blanched pasta; (ii) incorporation of acids in the pasta formulation; (iii) blanching in acidified water; (iv) rinsing with acidified water to reach a pH below 4.5 of the pasta and its subsequent gentler thermal processing; and/or (v) incorporating enzymes or stabilizing agents in the pasta formulation. However, pursuing these or similar actions would lead to an undesirable consumer-unfriendly label and detectable acid off-flavors.

In a particular example of one of the prior art methods, filled ravioli or unfilled pasta is formed and conveyed through a continuous hot water bath (for example, in a long, flat tank with wire mesh conveyor) at 200°F for approximately 4-5 minutes. This blanching step is long enough to remove excess flour/starch and achieve a significant reduction in microbial load; in addition, the ravioli absorbs about 15-20% water during this step. The hot, partially hydrated, blanched ravioli is then subjected to a freezing process (such as, but not limited to, a freezing tunnel, a cryogenic tunnel, blast freezing, or spiral blast freezing), where the pasta is frozen solid. The frozen ravioli is then transported/stored and drop deposited into a final product tray. Brine is then deposited in the tray to completely submerge the ravioli, and the tray containing the pasta in brine is then sealed. However, the pasta produced by this method exhibits a slight acidic flavor and aroma; also, during its shelf life, the pasta generates rancid notes and a pink-hued appearance.

Therefore, there is a need in the art for new and improved shelf-stable pasta products and methods of producing same that overcome the disadvantages and defects of the prior art. It is to such products, as well as methods of producing and using same, that the present disclosure is directed. The methods of the present disclosure provide, for the first time, establishment of a process involving pre-thermal processing preparation step(s) that generates pasta with minimal to no excess starch, clumping, matting, discoloration, or loss of texture.

### SUMMARY OF THE INVENTION

The present invention relates to a method of making a shelf stable pasta product comprising the steps of:
A) blanching a pasta in acidified water;
B) draining the pasta;
C) rinsing the pasta;
D) cooling the pasta;
E) packaging the pasta in a sealed container; and
F) thermal processing the sealed container containing the pasta; and.
with the proviso that the pasta product does not have a pH ≤ 4.5; and wherein the acidified water uses acids at concentration of at least 0.05 % w/w and is selected from the group comprising lemon juice, lemon juice concentrate, distilled vinegar, acetic acid, or combinations thereof; and wherein the pasta contains no added acidulants, no added stabilizers, no added enzymes.

In an embodiment of the invention, the pasta product contains no or minimal sauce or liquid.

In an embodiment of the invention, the pasta comprises a filled pasta or wherein the pasta comprises at least one of: Semolina pasta, Durum past, vegetable pasta, or combinations thereof.

In an embodiment of the invention, the pasta contains no egg white.

In an embodiment of the invention, the acidified water has a pH of 4.

In an embodiment of the invention, the blanching occurs for 2.5 to 25 minutes; and wherein the blanching occurs at a temperature in a range of from 180°F (82.2°C) to 200°F (93.3°C).

In an embodiment of the invention, the method is further comprising a second blanching using acidified water.

In an embodiment of the invention, step (D) is further defined as comprising the step of:
a) submerging the pasta in a cold water bath; and
b) removing the pasta from the cold water bath and allowing excess water to drain off.

In an embodiment of the invention, the thermal processing step further comprises as the use of additional heat and/or energy source(s) selected from the group comprising microwave, radiofrequency, acoustic, other similar advanced heat and/or energy producing technologies, or combinations thereof.

In an embodiment of the invention, the method is further comprising, after the cooling step, coating the pasta with oil.

In an embodiment of the invention, the packaging step further comprises flushing a package with an inert gas prior to sealing.

In an embodiment of the invention, the method further comprises a freezing step prior to the packaging step to freeze the pasta.

In an embodiment of the invention, the pasta is more resilient to thermal processing, wherein the more resilient is defined as at least one of: more resistant to clumping of the pasta, more resistantto excess starchiness of the pasta, more resistant to matting of the pasta, more resistant to discoloration of the pasta, more resistant to loss of texture of the pasta, compared to shelf-stable, ready-to-eat pasta packaged in brine and having a pH less than or equal to 4.5.

In an embodiment of the invention, the method is further comprising, after the packaging step,
a) a resting step of at least 7 days; and
b) a consuming step, wherein the pasta product is consumed by a human or animal.

The present invention further relates to product, comprising:
a sealed container having a shelf-stable, ready-to-eat pasta disposed therein,
wherein the pasta is made by the above-described method,
wherein the pasta has a pH above 4.5, and
wherein the pasta has been drained of excess moisture; and
wherein the container is substantially free of added liquid.

### BRIEF DESCRIPTION OF THE FIGURES

FIG. 1 graphically illustrates a processing diagram for a scale up from benchtop to pilot plant of one non-limiting embodiment of the methods of the present disclosure. "CCP" stands for "Critical Control Point."
FIG. 2 contains images of thermally abused samples from benchtop 3446B. The water-only blanched pasta (A) showed an evident greyer color, while the acidified water-blanched pasta (B) presented a more vibrant yellow color.
FIG. 3 contains images showing select samples of over-processed 11 minute blanch, 2% oil coated, water-only blanched pasta (A) and 0.1% citric acid acidified blanched pasta (B) from benchtop 3447B.
FIG. 4 contains images of acid-blanched (0.1% w/w citric acid, 8 minutes), oil-coated Barilla mini penne pasta retorted to F₀=4 using water-spray processing and (A) 0 rpm, (B) 6 rpm, and (C) 10 rpm.
FIG. 5 contains images of pasta blanched for 7 minutes in 0.1% w/w citric acid before (A) and after (B) coating with 2% w/w sunflower oil. These pasta images appear considerably lighter than the other figures, likely due to different lighting.
FIG. 6 contains post-processing images of pasta produced in the pilot plant: 0.1% citric acid blanch without (A) and with (B) 2% oil coating, and 0.2% citric blanch without (C) and with (D) 2% oil coating.
FIG. 7 contains images of pasta blanched with increasing levels of citric acid (V1 - 0% acid, V2 - 0.025% acid, V3 - 0.05% acid, V4 - 0.075% acid, V5 - 0.1% acid) on the same day of production.
FIG. 8 contains images highlighting color differences between Barilla mini penne pasta samples blanched in water with increasing amounts of citric acid (V1 - 0% acid, V2 - 0.025% acid, V3 - 0.05% acid, V4 - 0.075% acid, V5 - 0.1% acid).
FIG. 9 contains images of pasta blanched with increasing levels of citric acid (V1 - 0% acid, V2 - 0.025% acid, V3 - 0.05% acid, V4 - 0.075% acid, V5 - 0.1% acid) seven days after production.
FIG. 10 contains images of non-acidified-blanched (upper panel) and acidified-blanched (lower panel) commercial filled pastas: (A) Great Value mini cheese ravioli; (B) Great Value cheese tortellini; (C) Buitoni fresh mini ravioli; and (D) Buitoni fresh mini cheese tortellini.
FIG. 11 contains images of squash (A), purple carrot (B), green vegetables (C), tomato (D), and orange carrot (E) vegetable pastas produced according to the methods of the present disclosure, in which the pastas are blanched in acidified water and retorted with no liquid.
FIG. 12 contains images of orange carrot- (A), tomato- (B), spinach- (C), and purple carrot- (D) filled vegetable pastas after blanching and retorting using the methods of the present disclosure.
FIG. 13 contains images of Barilla mini penne pasta blanched in water with different types of added acidulants (V1- citric acid, V2 - Gluco-Delta-Lactone (GDL), V3 - acetic acid, V4 - lemon juice concentrate) and no acid (V5) on the day they were produced.
FIG. 14 contains images of Barilla mini penne pasta blanched in water with different types of added acidulants (V1- citric acid, V2 - Gluco-Delta-Lactone (GDL), V3 - acetic acid, V4 - lemon juice concentrate) and no acid (V5) seven days after they were produced.
FIG. 15 contains the ingredient label and product image for Barilla mini penne pasta.
FIG. 16 contains the ingredient label and product image for Great Value frozen mini cheese ravioli.
FIG. 17 contains the ingredient label and product image for Great Value frozen cheese tortellini.
FIG. 18 contains the ingredient label and product image for Buitoni fresh mini ravioli.
FIG. 19 contains the ingredient label and product image for Buitoni fresh mini cheese tortellini.
FIG. 20 contains the ingredient label and product image for Barilla three cheese tortellini.

### DETAILED DESCRIPTION

As utilized in accordance with the present disclosure, the following terms, unless otherwise indicated, shall be understood to have the following meanings:
The use of the term "a" or "an" when used in conjunction with the term "comprising" in the claims and/or the specification may mean "one," but it is also consistent with the meaning of "one or more," "at least one," and "one or more than one." As such, the terms "a," "an," and "the" include plural referents unless the context clearly indicates otherwise. Thus, for example, reference to "a compound" may refer to one or more compounds, two or more compounds, three or more compounds, four or more compounds, or greater numbers of compounds. The term "plurality" refers to "two or more."

The use of the term "at least one" will be understood to include one as well as any quantity more than one, including but not limited to, 2, 3, 4, 5, 10, 15, 20, 30, 40, 50, 100, etc. The term "at least one" may extend up to 100 or 1000 or more, depending on the term to which it is attached; in addition, the quantities of 100/1000 are not to be considered limiting, as higher limits may also produce satisfactory results. In addition, the use of the term "at least one of X, Y, and Z" will be understood to include X alone, Y alone, and Z alone, as well as any combination of X, Y, and Z. The use of ordinal number terminology (i.e., "first," "second," "third," "fourth," etc.) is solely for the purpose of differentiating between two or more items and is not meant to imply any sequence or order or importance to one item over another or any order of addition, for example.

The use of the term "or" in the claims is used to mean an inclusive "and/or" unless explicitly indicated to refer to alternatives only or unless the alternatives are mutually exclusive, although the disclosure also supports a definition that refers to only alternatives and "and/or." For example, a condition "A or B" is satisfied by any of the following: A is true (or present) and B is false (or not present), A is false (or not present) and B is true (or present), and both A and B are true (or present).

As used herein, any reference to "one embodiment," "an embodiment," "some embodiments," "one example," "for example," or "an example" means that a particular element, feature, structure, or characteristic described in connection with the embodiment is included in at least one non-limiting embodiment. The appearance of the phrase "in some embodiments" or "one example" in various places in the specification is not necessarily all referring to the same embodiment, for example. Further, all references to one or more embodiments or examples are to be construed as non-limiting to the claims.

Throughout this application, the term "about" is used to indicate that a value includes the inherent variation of error for an apparatus/composition/product/device/kit, the method being employed to determine the value, or the variation that exists among the study subjects. For example, but not by way of limitation, when the term "about" is utilized, the designated value may vary by plus or minus twenty percent, or fifteen percent, or twelve percent, or eleven percent, or ten percent, or nine percent, or eight percent, or seven percent, or six percent, or five percent, or four percent, or three percent, or two percent, or one percent from the specified value, as such variations are appropriate to perform the disclosed methods and as understood by persons having ordinary skill in the art. The term "about" can also be understood to refer to numbers in a range of numerals. Moreover, all numerical ranges herein should be understood to include all integers, whole or fractions, within the range.

As used in this specification and claim(s), the words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or openended and do not exclude additional, unrecited elements or method steps.

The term "or combinations thereof" as used herein refers to all permutations and combinations of the listed items preceding the term. For example, "A, B, C, or combinations thereof" is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AAB, BBC, AAABCCCC, CBBAAA, CABABB, and so forth. The skilled artisan will understand that typically there is no limit on the number of items or terms in any combination, unless otherwise apparent from the context.

As used herein, the term "substantially" means that the subsequently described event or circumstance completely occurs or that the subsequently described event or circumstance occurs to a great extent or degree. For example, when associated with a particular event or circumstance, the term "substantially" means that the subsequently described event or circumstance occurs at least 80% of the time, or at least 85% of the time, or at least 90% of the time, or at least 95% of the time. For example, the term "substantially adjacent" may mean that two items are 100% adjacent to one another, or that the two items are within close proximity to one another but not 100% adjacent to one another, or that a portion of one of the two items is not 100% adjacent to the other item but is within close proximity to the other item.

As used herein, the term "added" is understood to refer to an element that is introduced into a composition and not to the element as it may naturally inherently exist in a composition.

As used herein, the term "blanching" will be understood to refer to a cooking and/or hydrating process wherein a food substance(s) is placed in hot water, removed after a timed interval, and then exposed to a cooling step, such as (but not limited to) placing the food substance(s) into cold water or under cold running water.

As used herein, the term "cold water bath" will be understood to refer to a water bath that cools a food substance(s) to a temperature below its current temperature. Non-limiting examples of temperatures for a cold water bath, as used in accordance with the present disclosure, include: at or below about 10°C (50 °F) at or below about 4.44°C(40°F) at or below about -1.11 °C (30 °F) a range of from about 10 °C (50°F) to about 4.44 °C (40°F), a range of from about 4.44 °C (40°F) to about -1.11 °C (30°F), and a range of from about 10 °C (50°F) to about 4.44 °C (40°F). In addition, the term "cold water bath" as used herein will be understood to include an ice water bath.

The term "shelf-stable" as used herein refers to the ability of a food product to be safely stored and sold in a sealed container at ambient or room temperature while still having a useful shelf life in which the taste, texture, and nutritional aspects (i.e., nutritional integrity, nutritional potency, etc.) of the product is retained. Examples of periods considered to be a "useful shelf life" include, but are not limited to, at least about two months, at least about three months, at least about four months, at least about five months, at least about six months, at least about twelve months, and longer.

As used herein, the term "thermal processing" refers to a food sterilization technique in which the food is heated at a temperature high enough to destroy microorganisms and enzymes. The specific amount of time required depends upon the specific food and the growth habits of the enzymes or microorganisms. Both the texture and the nutritional content of the food may be altered due to thermal processing. Some examples of thermal processing include, but are not limited to: Retort, Ultra-High Temperature (UHT) or Aseptically processing, pasteurization, ultra-pasteurization, hot fill, Extended Shelf Life (ESL), Microwave-Assisted Thermal Sterilization (MATS), High- and Ultra-High-Pressure Processing (HPP / UHPP), and High-Intensity Light Pulse (HILP) processing, as well as others that are recognized in the industry, and any combination thereof.

As used herein, the term "vegetable pasta" will be understood to refer to a pasta that contains at least 3% vegetables by weight. As used herein, the term "vegetables" is intended to include vegetable solids, including, but not limited to: fresh vegetables, vegetable powder, vegetable puree, vegetable paste, and combinations thereof.

As used herein, the term "acidulant" refers to food additives that give a sharp taste to foods (i.e., tart, sour, and/or acidic flavor) and act as preservatives to reduce the pH of the food.

Turning now to the methods of the present disclosure, these methods provide, for the first time, establishment of a pre-thermal preparation steps that generate shelf-stable, ready-to-eat pasta with minimal to no clumping, excess starch, matting, discoloration, or loss of texture. In certain non-limiting embodiments, these methods include the ability to thermally process the pasta with no sauce or liquid. Blanching of pasta in acidified water is shown herein to generate pasta that withstands thermal processing with no added liquid or sauce and that presents color, texture, flavor, and aromas akin to homemade, high-quality pasta. These methods are shown to be useful with unfilled as well as filled pastas, "conventional" semolina and durum wheat flour pastas, vegetable pastas, and pastas with and without egg or egg whites. These methods have the added benefit of not requiring the pasta product itself to reach a pH of 4.6 or below.

By using an acid blanching step and not directly acidifying the pasta, the methods of the present disclosure bypass the need to rely on reaching a pasta pH below 4.5 - 4.6. In addition, the acid blanching step can be performed with blanching water having an acidification level as low as about 0.05% citric acid and still obtain the aforementioned benefits. Other advantages of the methods of the present disclosure include (a) the lack of addition of water (or other liquid) to the package/container, which could be absorbed during one or more of the processing steps; and (b) the lack of any acidification after the cooking step.

The shelf-stable, ready-to-eat pasta produced by the methods of the present disclosure (which include the use of acidified blanching water and thermal processing with no added liquid) have a firmer texture and brighter color that is better able to withstand thermal processing. In addition, the pasta can be subjected to more stringent thermal processing conditions (as opposed to the requirement for "gentler" thermal processing assigned to the high-acid pasta products of the prior art). Also in these methods, there is no need to add acidulants, stabilizers, or other additives to ensure that the pasta that has been thermally processed with no liquid can withstand the thermal processing steps (as required in some methods of the prior art) to generate a high quality product. In addition, the methods of the present disclosure eliminate the requirement for excess brine, water, sauce, or other liquid to be present in the container/tray.

It has been observed that pasta that has been blanched in acidified water absorbs less water, suggesting that it may strengthen and maintain (or even reduce) pore sizes in the pasta matrix and/or impact water uptake by the starch granules present in the matrix. Blanching pasta in acidified water also induces chemical changes to the surface proteins and starch. As such, a higher rigidity of the pasta may be generated, thus allowing the pasta to better withstand thermal processing.

Further, the methods of the present disclosure have been shown to be effective in commercial-grade semolina and durum wheat pastas not designed for industrial work, filled and unfilled pastas, and filled and unfilled pastas with high amounts of vegetable powders. The methods of the present disclosure have also been tested with stationary and rotation water spray retorting, and both of these techniques can be utilized in accordance with the present disclosure.

The method includes the steps of: (A) blanching a pasta in acidified water; (B) draining the pasta; (C) rinsing the pasta (for example (but not by way of limitation), to remove excess starch); (D) cooling the pasta (for example (but not by way of limitation), to impede further hydration); (E) packaging the pasta in a sealed container; and (F) thermally processing the pasta in the sealed container; with the proviso that the pasta product does not have a pH ≤ about 4.5.

The method is intended to include where the pasta product is a shelf stable pasta product.

At least one non-limiting embodiment of the method is intended to include where the pasta product exhibits no or minimal clumping after processing.

At least one non-limiting embodiment of the method is intended to include where the pasta product exhibits no or minimal excess starch after processing.

At least one non-limiting embodiment of the method is intended to include where the pasta product exhibits no or minimal matting after processing.

At least one non-limiting embodiment of the method is intended to include where the pasta product exhibits no or minimal discoloration after processing.

At least one non-limiting embodiment of the method is intended to include where the pasta product exhibits no or minimal loss of texture after processing.

The method is intended to include where the pasta recipe contains no added acidulants.

The method is intended to include where the pasta recipe contains no added stabilizers.

At least one non-limiting embodiment of the method is intended to include where the pasta recipe contains no added alginate.

At least one non-limiting embodiment of the method is intended to include where the pasta recipe contains no added propylene alginate.

The method is intended to include where the pasta recipe contains no added enzymes.

At least one non-limiting embodiment of the method is intended to include where the pasta recipe contains no egg white.

At least one non-limiting embodiment of the method is intended to include where the pasta product contains no or minimal added sauce or liquid at the thermal processing step (i.e., the pasta sealed in the container contains no or minimal added sauce or liquid).

At least one non-limiting embodiment of the method is intended to include where the pasta product contains no or minimal added sauce or liquid at the retorting step (i.e., the pasta sealed in the container contains no or minimal added sauce or liquid).

At least one non-limiting embodiment of the method is intended to include where the pasta is a filled pasta.

At least one non-limiting embodiment of the method is intended to include where the pasta is an unfilled pasta.

At least one non-limiting embodiment of the method is intended to include where the pasta is a Semolina pasta.

At least one non-limiting embodiment of the method is intended to include where the pasta is a Durum pasta.

At least one non-limiting embodiment of the method is intended to include where the pasta is a vegetable pasta.

At least one non-limiting embodiment of the method is intended to include where the acidification of blanching water is to a pH of about 4.

The blanching water is acidified using acids selected from the group comprising lemon juice, lemon juice concentrate, distilled vinegar, acetic acid, or combinations thereof. In a particular (but non-limiting) example, the blanching water is acidified using lemon juice and/or lemon juice concentrate. In another particular (but non-limiting) example, the blanching water is acidified using distilled vinegar. In yet another particular (but non-limiting) example, the blanching water is acidified using acetic acid.

The blanching step may be performed at any temperature and for any period of time that allows for the production of the pasta product in accordance with the present disclosure. In at least one non-limiting embodiment, the pasta is blanched in acidified water at a temperature in a range of from about 180°F to about 200°F and for a time period in a range of from about 2.5 minutes to about 25 minutes (depending on the type of pasta used). These parameters, while non-limiting to the scope of the present disclosure, have been shown herein to protect the color and texture of the pasta and to minimize matting, excess starch, loss of firmness, and discoloration of the pasta, as well as minimizing or preventing other undesirable changes to the pasta caused by the various treatments used in the prior art. In addition, the methods of the present disclosure can eliminate the need for egg white to be present in the pasta formulation (although it will be understood that any of the pastas used in accordance with the present disclosure can still include egg/egg white, if desired).

In at least one non-limiting embodiment of the method, the cooling step further includes the steps of: a) submerging the pasta in a cold water bath; and b) removing the pasta from the cold water bath and allowing excess water to drain off. The pasta may be submerged in the cold water bath for any period of time that allows for the production of the pasta product in accordance with the present disclosure. For example (but not by way of limitation), the pasta may be submerged in the cold water bath for a time period in a range of from about 10 seconds to about 60 minutes, such as (but not limited to) about 2 minutes. In a particular (but non-limiting) embodiment, the cold water bath is an ice water bath.

The thermal processing step may be performed using any food sterilization technique in which the food is heated at a temperature high enough to destroy microbes and enzymes. The specific amount of time required depends upon the specific food and the growth habits of the enzymes or microbes. Non-limiting examples of thermal processing techniques that may be utilized in accordance with the present disclosure include: retort, Ultra-High Temperature (UHT) or aseptically processing, pasteurization, ultra-pasteurization, hot fill processing, Extended Shelf Life (ESL) processing, Microwave-Assisted Thermal Sterilization (MATS), High- and Ultra-High-Pressure Processing (HPP / UHPP); High-Intensity Light Pulse (HILP), and others that are recognized in the industry, as well as any combination of two or more of the above techniques.

In certain non-limiting embodiments, the thermal processing step comprises a retort. At least one non-limiting embodiment of the method is intended to include where the retort comprises an immersion retort. At least one non-limiting embodiment of the method is intended to include where the retort comprises a water spray retort. At least one non-limiting embodiment of the method is intended to include where the retort comprises stationary water spray retorting. At least one non-limiting embodiment of the method is intended to include where the retort comprises rotation water spray retorting. When rotation water spray retorting is utilized, at least one non-limiting embodiment of the method is intended to include where the retort rotates in a range of from about 0 rpm (rotations per minute) to about 6 rpm.

At least one non-limiting embodiment of the method is intended to include where the particular thermal process used in the thermal processing step is supplemented with the use of one or more additional heat and/or energy source(s). For example (but not by way of limitation), the additional source(s) may be selected from the group comprising microwave, radiofrequency, acoustic, other similar advanced heat and/or energy producing technologies, or combinations thereof.

The methods of the present disclosure may contain one or more additional steps. For example (but not by way of limitation), at least one non-limiting embodiment of the method is intended to include a second blanching step using acidified water as described herein above.

Alternatively (and/or in addition thereto), at least one non-limiting embodiment of the method is intended to further include the steps of: a) submerging the pasta in an ice water bath; and b) removing the pasta from the ice water bath and allowing excess water to drain off. The pasta may be submerged in the ice water bath for any period of time that allows for the production of the pasta product in accordance with the present disclosure. For example (but not by way of limitation), the pasta may be submerged in the ice water bath for a time period in a range of from about 10 seconds to about 60 minutes, such as (but not limited to) about 2 minutes.

At least one non-limiting embodiment of the method is intended to include wherein after the cooling step, the pasta is coated with oil. The oil coating step may be performed by any methods known in the art or otherwise contemplated herein. For example (but not by way of limitation), the oil coating step may include coating the pasta with oil by spraying. In addition, in certain non-limiting embodiments, the pasta product is coated with oil and agitated, vibrated, and/or tumbled to help provide more even distribution of the oil.

At least one non-limiting embodiment of the method is intended to include where the packages are flushed with inert gas prior to sealing.

At least one non-limiting embodiment of the method is intended to include a freezing step prior to the packaging step to freeze the pasta prior to packaging. The pasta may be frozen by any methods known in the art or otherwise contemplated herein that allow for production of the pasta product in accordance with the present disclosure. For example (but not by way of limitation), the pasta may be frozen in a cryogenic tunnel, frozen in a freezing tunnel, frozen by blast freezing, and/or frozen by spiral blast freezing.

At least one non-limiting embodiment of the method is intended to include a transporting step after the freezing step, whereby the pasta is transported for packaging, further processing, and/or storage.

At least one non-limiting embodiment of the method is intended to include a storing step after the freezing step. At least one non-limiting embodiment of the method is intended to include where the pasta is stored frozen.

At least one non-limiting embodiment of the method is intended to include where the pasta is coated with oil after the freezing step. The oil coating step may be performed by any methods known in the art or otherwise contemplated herein. For example (but not by way of limitation), the oil coating step may include coating the pasta with oil by spraying oil onto the pasta. In addition, in certain non-limiting embodiments, the pasta product is coated with oil while agitating, vibrating, and/or tumbling the pasta to help provide more even distribution of the oil.

At least one non-limiting embodiment of the method is intended to include where the pasta product is more resilient to thermal processing. The term "more resilient" as used herein will be understood to reference the pasta's ability to be less subject to permanent change/deformation of one or more of the structural characteristics thereof when compared to the prior art pasta product. For example (but not by way of limitation), one or more of the following may be true: (i) the pasta product is more resilient to clumping; (ii) the pasta product is more resilient to excess starch formation (i.e., excess "starchiness"); (iii) the pasta product is more resilient to matting; (iv) the pasta product is more resilient to discoloration; and/or (v) the pasta product is more resilient to loss of texture.

At least one non-limiting embodiment of the method is intended to include where there is a resting step after packaging. The resting step may be any period of time that allows for the production of a pasta product in accordance with the present disclosure. For example (but not by way of limitation), the resting step may last for at least about 7 days.

At least one non-limiting embodiment of the method is intended to include where after packaging there is a resting step of at least 7 days after packaging, and wherein the resting step is followed by an eating step.

At least one non-limiting embodiment of the method is intended to include where there is a consuming/eating step after packaging, wherein during the consuming/eating step, at least a portion of the pasta is consumed by a human or animal.

At least one non-limiting embodiment of the method is intended to include where the pasta product is not refrigerated after the packaging step. However, it will be understood that the scope of the present disclosure may also include subjecting the pasta product to refrigeration or freezing after the packaging step, if desired.

At least one non-limiting embodiment of the method is intended to include a pre-thermal processing preparation process that will generate pasta with minimal to no clumping, excess starch, matting, discoloration, or loss of texture when compared to homemade pasta. The method includes thermally processing the pasta with no added sauce or liquid. The method includes blanching of pasta in acidified water, which is shown herein to generate pasta that withstands thermal processing with no liquid or sauce, and the pasta produced by the method possesses color, texture, flavor, and aromas akin to homemade high-quality pasta. This method has been shown to work with unfilled pastas, filled pastas, "conventional" semolina and durum wheat flour pastas, vegetable pastas, and pastas with and without egg white; the method also has the added benefit of not requiring the product to reach a pH of 4.6 or below.

At least one non-limiting embodiment of the method is intended to include a pre-retort processing preparation process that will generate pasta with minimal to no clumping, excess starch, matting, discoloration, or loss of texture when compared to homemade pasta. The method includes retort processing with no added sauce or liquid. The method includes blanching of pasta in acidified water, which is shown herein to generate pasta that withstands retorting with no liquid or sauce, and the pasta produced by the method possesses color, texture, flavor, and aromas akin to homemade high-quality pasta. This method has been shown to work with unfilled pastas, filled pastas, "conventional" semolina and durum wheat flour pastas, vegetable pastas, and pastas with and without egg white; the method also has the added benefit of not requiring the product to reach a pH of 4.6 or below.

In a particular (but non-limiting) embodiment of the method, a pasta is blanched in acidified water, and the cooked pasta is thoroughly drained and rinsed to remove excess starch, then cooled to impede further hydration. After an optional additional rinse step, the pasta is drained of excess moisture and then filled into one or more containers of choice. The container(s) are flushed with inert gas to provide a slight headspace and are then sealed. The product is thermally processed, such as (but not limited to) in a retort with sprayed water and about 0 to about 6 rpm rotation. In an optional step, the pasta is frozen (for example, but not by way of limitation, cryogenically) after the acid blanch step to facilitate filling the container(s) during processing.

Certain non-limiting embodiments of the present disclosure are directed to a pasta product produced by any of the above described methods. In particular (but non-limiting) embodiments, the pasta product may also possess one or more of the characteristics listed below.

The present invention is also directed to a product that comprises a sealed container having a shelf-stable, ready-to-eat pasta disposed therein. The pasta has a pH above about 5 (above about 4.5 or above about 4.6), and the pasta has been drained of excess moisture such that the container is substantially free of added liquid.

In a certain non-limiting embodiment, the pasta is produced from durum wheat and/or semolina.

In a certain non-limiting embodiment, the pasta contains egg. In another non-limiting embodiment, the pasta contains substantially no egg.

In a certain non-limiting embodiment, the pasta is filled.

In a certain non-limiting embodiment, the pasta is unfilled.

In a certain non-limiting embodiment, the pasta has a high vegetable content.

In a certain non-limiting embodiment, the pasta has been retorted in the sealed container and in the absence of added liquid in the sealed container.

In a certain non-limiting embodiment, the pasta has improved taste, texture, and color when compared to shelf-stable, ready-to-eat pasta packaged in brine and having a pH less than or equal to about 4.5.

In a certain non-limiting embodiment, the color of the pasta has less bleaching when compared to shelf-stable, ready-to-eat pasta packaged in brine and having a pH less than or equal to about 4.5.

In a certain non-limiting embodiment, the taste of the pasta is less acidic when compared to shelf-stable, ready-to-eat pasta packaged in brine and having a pH less than or equal to about 4.5.

The pasta contains substantially no added acidulants.

The pasta contains substantially no added stabilizers.

In a certain non-limiting embodiment, the pasta contains substantially no added alginate.

In a certain non-limiting embodiment, the pasta contains substantially no propylene alginate.

The pasta contains no added enzymes.

In a certain non-limiting embodiment, the pasta contains substantially no added sauce.

In a certain non-limiting embodiment, the product is sized and shaped for consumption by a toddler. In an alternative non-limiting embodiment, the product is sized and shaped for consumption by adolescents and/or adults.

In a certain non-limiting embodiment, the pasta exhibits no or minimal clumping.

In a certain non-limiting embodiment, the pasta exhibits no or minimal excess starch.

In a certain non-limiting embodiment, the pasta exhibits no or minimal matting.

In a certain non-limiting embodiment, the pasta exhibits no or minimal discoloration.

In a certain non-limiting embodiment, the pasta exhibits no or minimal loss of texture.

At least one embodiment of the present disclosure is intended to include where the pasta is placed in a second hot water cooking tank filled with acidified water in accordance with the present method, to impart the additional hydration needed for texture and thermal processing (another 10-20%), as well as induce the chemical changes to the surface protein and starch; then the fully hydrated, acid blanched pasta is frozen. At least one embodiment of the present disclosure is intended to include where these frozen but now fully hydrated pasta (such as, but not limited to, ravioli) can be oiled (such as, but not limited to, by being sprayed with an oil mist) either before or after being drop deposited into the final trays. Application of oil to the pasta prior to deposit into the tray will provide a greater ease of deposit.

At least one embodiment of the present disclosure is intended to include where the pasta is drop deposited while frozen. For example (but not by way of limitation), depositing of the pasta in the tray(s) may be much less cumbersome to do with frozen pasta than with thawed pasta. However, the scope of the present disclosure is not limited to the use of frozen pasta. Indeed, at least one embodiment of the present disclosure is intended to include where the pasta is drop deposited after being partially or completely thawed.

At least one embodiment of the present disclosure is intended to include where the pasta can be oiled before the product is frozen. At least one embodiment of the present disclosure is intended to include where a vibration or tumbling step is added to better coat substantially all the surfaces with oil.

At least one embodiment of the present disclosure is intended to include where there is a rest period of approximately seven days before the product is consumed to allow the full equilibration of the product to allow any heterogeneous moisture distribution, in which sections of the pasta appear to be overhydrated while others appear to be under-hydrated to equilibrate. This allows any heterogeneous hydration patches to disappear, giving way to noodles with a homogeneous bright color and *al dente* texture.

### EXAMPLES

The work delineated in this Example was executed to develop and optimize production processes that would enable the delivery of ready-to-eat, shelf-stable pasta that was thermally processed (such as, but not limited to, retorted) with no liquid or sauce and without the need to fully acidify the pasta. The work was conducted at both the benchtop level as well as scaled up to the pilot plant level. The benchtop level used induction burners and standard kitchen equipment. The pilot plant trials following a batch approach with steam-jacketed kettles were executed to better understand the scalability of the process.

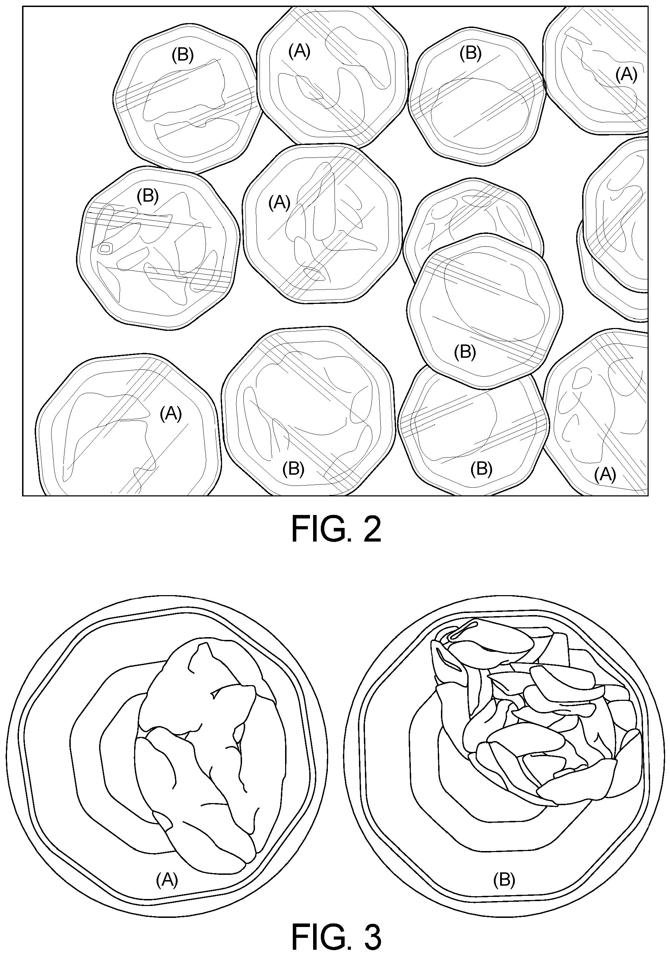

Blanching of pasta in a potentially non-declarable 0.1% citric acid solution generated a fully cooked pasta with no off-flavors, a bright color, and an *al dente* texture, even after retorting with no sauce or liquid. The process has been shown to be effective for "traditional" semolina and durum wheat unfilled and filled pastas, as well as filled and unfilled pastas with a high vegetable content. The benchtop and pilot plant results disclosed in this Example demonstrate that full acidification (pH ≤4.3) of the pasta is not necessary; post-retort observations of samples in which the pasta matrix was not successfully acidified (i.e., final pH values ranging from 4.84 - 6.04 24 hours after production) showed that despite not having reached the typical acidic pH utilized in the prior art, the pasta blanched in acidified water exhibited a better (firmer) texture and a brighter yellow color than the water-only blanched and acidified prior art counterpart (see, for example, FIG. 2 as well as the description provided herein after).

In addition, the processes described herein could possibly eliminate the need for egg white in the pasta formulation. Further, the methods disclosed herein could be implemented in existing products. Also, the methods disclosed herein are suitable for industrial scale-up of the process and packaging.

### METHODOLOGY AND TRIALS

### I. BENCHTOPS

Numerous benchtops were executed in the quest to optimize the method. While there were small differences between benchtops, below are the general materials and methods. Specific differences are provided where relevant.

### Materials:

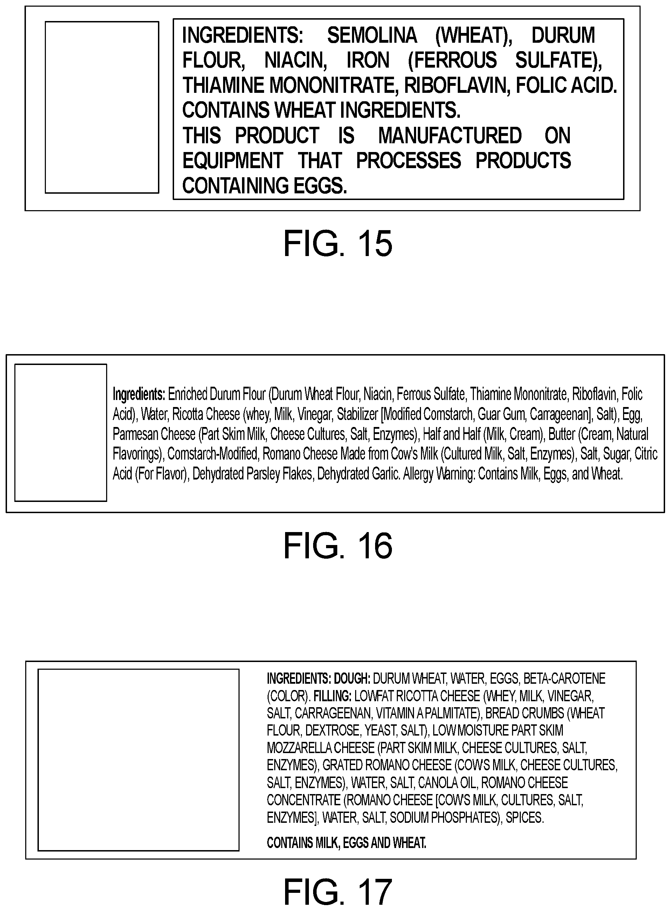

Ingredients: SUNVELLA Premium SunPure High Oleic Sunflower Oil (Oil Force LLC, Aventura, FL); Barilla Mini Penne pasta (Barilla USA, Northbrook, IL; many different batches of Barilla Mini Penne pasta were used throughout this Example, so specific batch/lot information for benchtops is not provided; see FIG. 15 for ingredient information); Citric Acid Anhydrous; Ice; Tap water; Clear 6 oz. trays and lid stock.

Ingredient Modifications: Filled pasta - Barilla Mini Penne pasta was substituted with the following pastas: Great Value Frozen mini cheese ravioli, Great Value Frozen cheese tortellini, Buitoni Fresh mini ravioli, Buitoni Fresh mini cheese tortellini, and Barilla three cheese tortellini. See FIGS. 16-20, respectively, for ingredient labels for each of these pastas. Vegetable pasta - Barilla Mini Penne pasta was substituted with the following pastas: (i) unfilled pastas -tomato, green vegetable, purple carrot, orange carrot, and butternut squash; (ii) filled pastas - spinach, tomato, carrot, and purple carrot.

Acidulant types - Experimental design was expanded to include the following acids: Citric Acid Anhydrous, Lemon Juice Concentrate (Citromax lemon juice concentrate 400GP), Distilled White Vinegar (Great Value), Gluco-Delta-Lactone (GDL) Acid (Soymerica), or no acid.

Equipment: Fluke 53II Single Input Digital Thermometers (Fluke Corporations, Everett, WA) - Calibrated; 3.5-Qt. Saucepans (for use with induction burners); Standard Single Countertop Induction Cooktops (CookTek, LLC, Carrollton, TX); Stainless steel strainers; and Koch UltraSource sealer.

### Method:

The following procedure was followed to prepare samples at the bench level:
1. Weighed out ingredients.
2. Prepared citric acid solution (acid levels used in the benchtops included 0.1%, 0.2%, and 0.3% w/w).
3. Prepared ice water bath for pasta.
4. Heated water/citric acid solution to 190°F (this temperature is implemented in factories for the pilot plant to minimize splashing and boiling over).
5. When temperature has been reached, added pasta to pot and blanched at about190°F (although any temperature in a range of from about 180°F to about 200°F is acceptable) for the specific duration of time.
6. Removed pot from burner, drained pasta into colander, and rinsed thoroughly with cold water to remove excess starch.
7. Submerged pasta in ice water bath for 2 minutes.
8. Removed pasta from ice water bath and allowed excess water to drain off.
9. Coated pasta in sunflower oil.
10. Weighed 60g pasta into 6 oz. octagon trays.
11. Sealed trays using the Koch sealer with nitrogen flush.
12. Transported trays for thermal processing.
13. Processed samples in Allpax (Covington, LA) retort.

### Method Modifications:

Filled Pasta: For these pasta products, blanching time was optimized to ensure that proper levels of hydration were attained. In general, pastas were blanched for approximately 30 seconds to one minute less than what was suggested on the package (TABLE 1). The rest of the established procedure was unaltered.

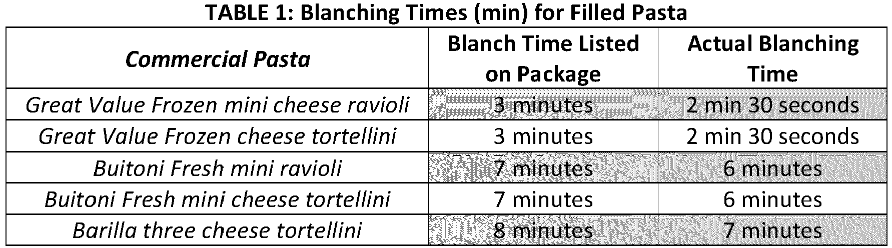

Vegetable Pasta: Unfilled vegetable pastas were blanched in 0.1% w/w citric acid for 4 min; the rest of the procedure was unaltered. Filled vegetable pastas were blanched in 0.1% w/w citric acid for 25 min; the rest of the procedure was unaltered.

Acidulant Types: The main difference in the methodology followed for the different acid types was that the adequate concentration of acid needed to be identified first. To this end, solutions of each kind of acid were prepared until the pH of the 0.1% citric acid, 3.98, was reached.

TABLE 1 reflects the acidulant concentration and final pH of the solution.

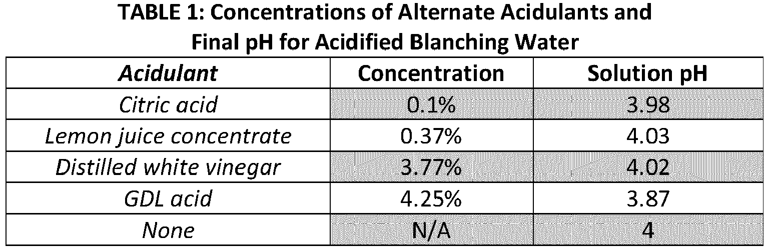

### Retort Process:

Examples of various combinations of retort processes used during optimization of the method (including immersion or spraying and stationary or rotation) are outlined in Table 3.

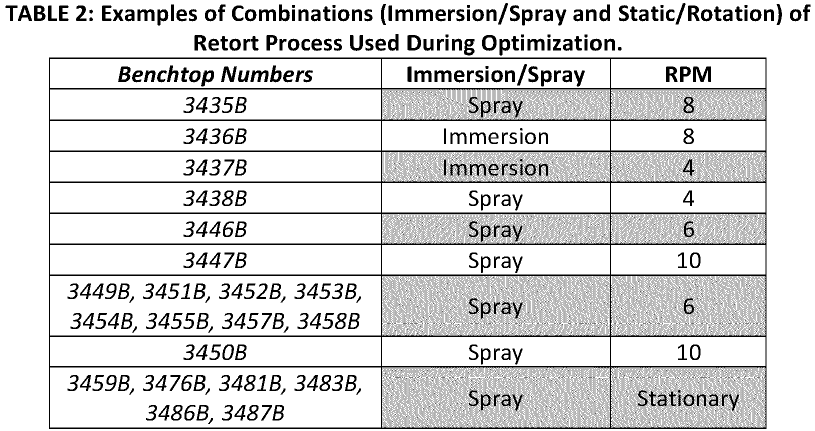

### II. PILOT PLANT SCALE-UP

### Materials:

Ingredients: Barilla mini penne pasta, Sunflower oil, Citric acid, Water.

Equipment: Groen Kettle, 6 oz. octagon tray, Koch sealer, Tram buckets, Video Jet coder, X-ray machine, Allpax retort.

### Method:

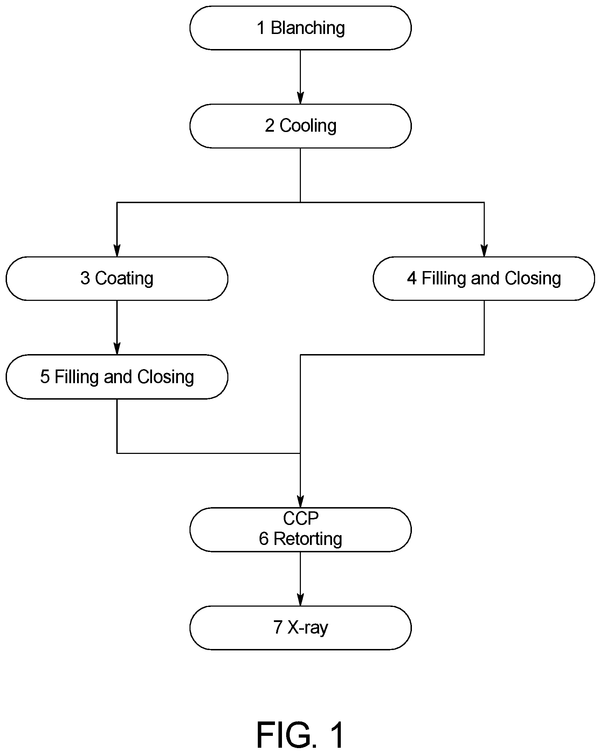

The parameters for the pilot plant process were kept the same as that of the benchtop. The process is summarized in FIG. 1. A large flat sieve was used to encourage adequate rinsing/draining. Also, a portion of the pasta (and blanching water) from the bottom of the kettle was removed and then added back into the kettle about every 2 minutes to reduce the risk of clumping and clogging the system.

### III. SHELF LIFE STUDY

### Materials:

Materials used in this study included trays of 0.1% and 0.2%citric acid-blanched mini penne pasta produced in the pilot plant, and incubating chambers at 4°C, 20°C, and 30°C.

### Method:

The following procedure was followed for storage and testing in the shelf life study:
1. Upon release of product from pilot plant, samples were labeled and stored at designated temperature incubating chambers.
2. At designated time points (2, 4, 6, 8, 12, 16, 20, 24, 28, 32, 36, 40, 44, 48, and 52 weeks), samples were taken from the chambers for tastings, photography, and texture and moisture analyses. Tastings were carried out at room temperature, as this would generate a worst-case scenario as related to texture.

### RESULTS

### Method Optimization

### Acidified blanching:

Post-thermal process observations of the samples in which the pasta matrix was not successfully acidified showed that despite not having reached the appropriate pH (final pH values ranged from 4.84 - 6.04 at 24 hours after production), the pasta blanched in acidified water did exhibit a better (firmer) texture and a brighter yellow color than its water-only blanched counterpart (FIG. 2).

It was hypothesized that the mechanism by which acidification improves the ability of pasta to withstand thermal processing may be generated by exposing pasta to acidulants, while not necessarily relying on a decreased pH of the pasta. Despite the prior art's target pH of the pasta (≤4.5) not being reached, the pasta still presented the brighter color and superior texture associated with acidification. The mechanism by which this is achieved is not known; however, it is hypothesized that the acidulant-induced physicochemical changes on the surface of the pasta may be enough to alter the starch-protein interactions that are crucial to the quality of pasta. Indeed, as stated in Fuad and Prabhasankar, (2010), "the combination of starch gelatinization and protein network formation is the most important interaction for pasta texture"; De Noni and Pagani (2010) state that "the physical competition between these two phenomena ultimately determines the final texture of the product." It is possible that the presence of acid in the blanching water (i) altered the strength of the protein network, either reducing the size of the pores by which water could enter the pasta matrix, and/or increased the rigidity of the matrix, thereby limiting the extent to which the starch granules trapped in the protein network could swell (Marti et al., 2014); and/or (ii) generated acid hydrolysis of starch, limiting the amount of gelatinized starch in the matrix. According to De Noni and Pagani (2010) and BeMiller and Whistler (2009), the delayed swelling and solubilization of the granules reduces the disruption of protein network development." Strengthening of protein networks in pasta via protein enrichment - such as adding egg white - has been shown to increase the firmness and elasticity of the pasta, while reducing the compressibility of cooked pasta and reducing water uptake (Laleng, et al.; Kill 2001; and Marti et al. 2014). It is possible that the modifications in the protein network of the pasta triggered by the acid blanching are generating the same benefit.

The benefit of acidified blanching became more apparent when the pasta products received excessive thermal abuse in the retort; the actual F₀ was estimated to be higher than 30. Interestingly, despite the samples being thoroughly over-processed, there was an evident difference between the samples blanched in acidified water versus only water. As FIGS. 2 and 3 show, control (water-only blanch) samples exhibited a visibly matted greyish appearance; conversely, samples blanched in acidified water- while by no means acceptable - presented a considerably brighter color and looked less like a congealed amorphous mass and more like individual pasta noodles that were compressed together, and could separate relatively easily by shaking the tray if they were coated with 2% oil.

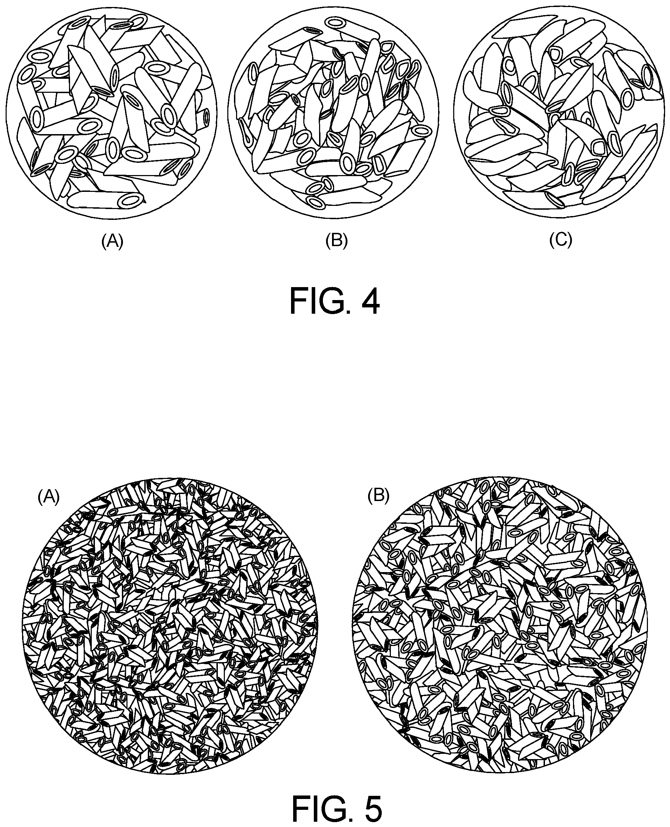

A comprehensive study was conducted to test the proposed hypothesis (Appendix TABLE 14, benchtops 3449B, 3450B, and 3451B), in which pasta was blanched for 5, 8, or 11 minutes in water, 0.1% w/w citric acid, 0.2% w/w citric acid, or 0.3% w/w citric acid and was either uncoated with oil or coated with 2% oil prior to filling trays (pasta blanched for 5 minutes was identified as the "worst case scenario" and was selected to be used for thermal process probing). This study was processed using a spray retort thermal process with either a 6 or 10 rpm rotation setting. It was observed that a 5 min blanch rendered pasta that was slightly too *al dente,* the 8 minute blanch seemed to offer a suitable texture, and the 11 minute blanch was slightly overcooked. In all instances, blanching in acidified water generated a brighter color and a firmer texture than their water-only counterparts. As the acid concentration increased, the texture tended to become firmer, and slight off-flavors appeared at the 0.3% level regardless of blanching time. Samples processed at a rotation speed of 10 rpm were considerably deformed and exhibited more clumping, whereas the samples processed at 6 rpm presented both minimal deformation and marginal clumping. Additional work was conducted to test whether similar results could be attained using stationary water spray retorting (FIG. 4). The results were comparable to that of the 6 rpm process.

TABLE 3 summarizes the optimized process for Barilla mini penne pasta.

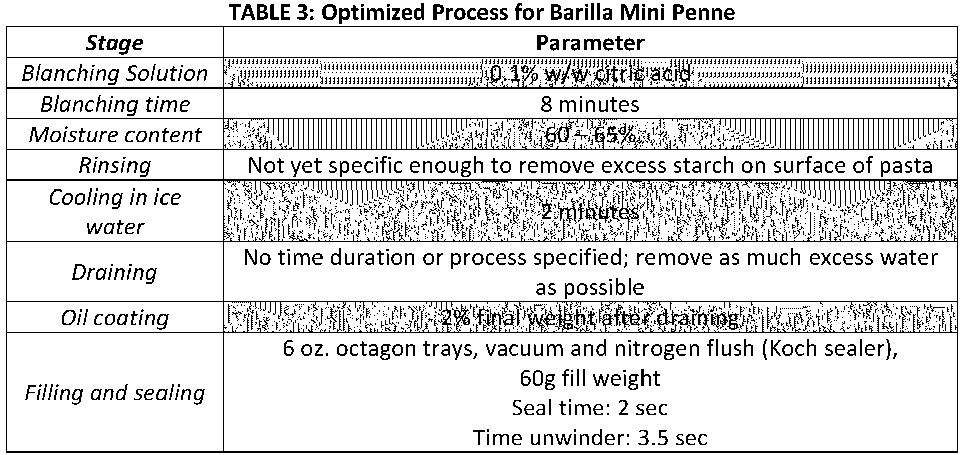

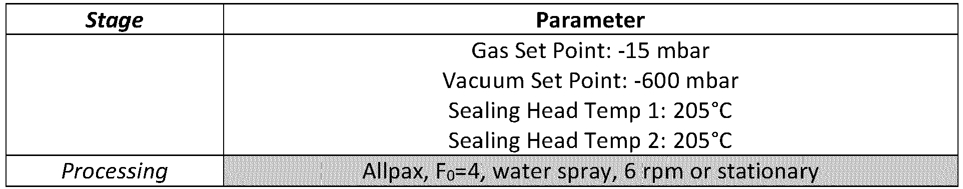

In at least one embodiment, in order to avoid clumping, approximately every 2 minutes or so the valve of the steam kettle is opened and blanching water and pasta purged from the system in order to avoid the formation of clumps. While the pasta was reintroduced into the kettle, the water-to-pasta ratio was modified.

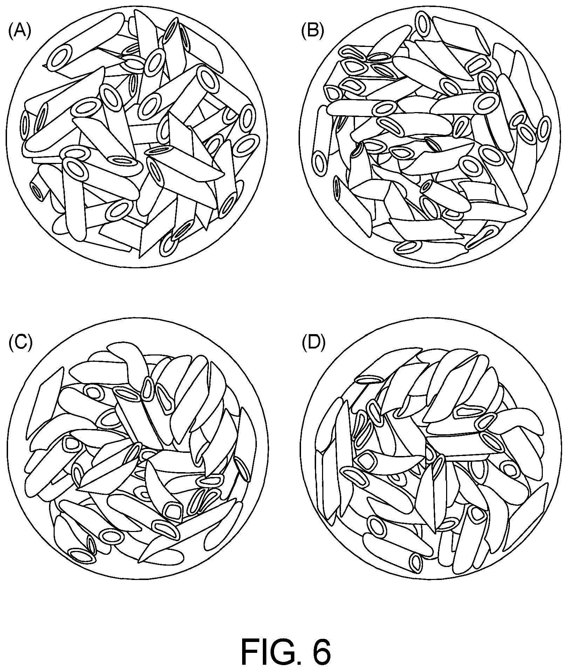

The resulting pasta from the run (FIGS. 5-6 and Table 5) was similarto that produced on a benchtop level, though there were slight differences in texture and appearance. The less thorough rinsing and draining steps resulted in slightly starchier pasta with a higher tendency to clump, though coating with oil greatly decreased this. Providing adequate rinsing and draining of pasta should be considered. The product generated was considered acceptable and was used to conduct a one-year shelf life.

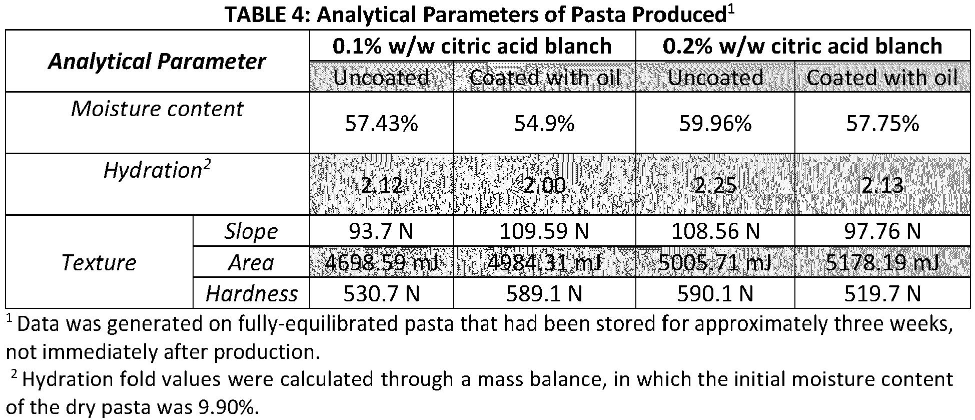

### Shelf Life Study:

Results consistently showed that storage at refrigeration temperature (4°C) was not ideally suitable for the method; samples showed a drier, more brittle texture than their 20°C and 30°C counterparts. Similarly, the oil-coated samples consistently fared better overall than their uncoated counterparts. The 30°C samples were described as being more "moist" and "springy" and having the best texture throughout the study. The oil-coated 0.1% citric acid blanch has so far been considered the best sample regardless of the incubation temperature.

According to the literature (Singer 2010), the most significant changes to hardness occur within the first 20 days after production, with minimal changes in water content (±1%) and water activity (±0.01).

This disclosure for the first time has proven that acidification of pasta to a pH ≤4.2 is not necessary in order to attain a high-quality thermal processed pasta. While 0.1% w/w citric acid has been shown herein to be a suitable concentration to reap the benefits similar to acidification, and 0.3% w/w citric acid is the highest concentration at which off-flavors and undesirable changes to the product's appearance commence, no clear minimum concentration had been established.

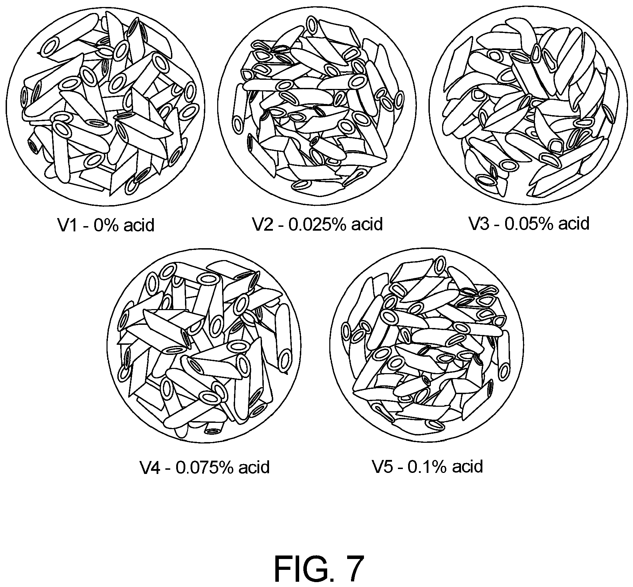

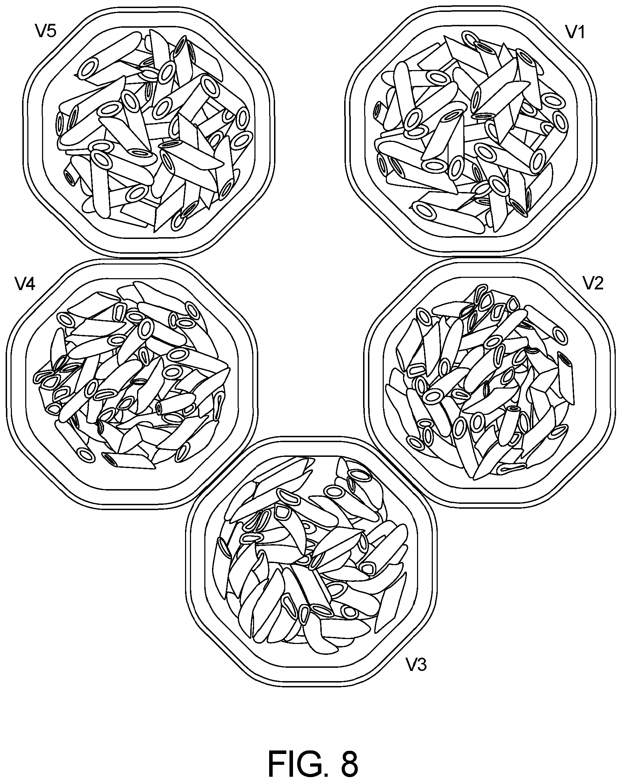

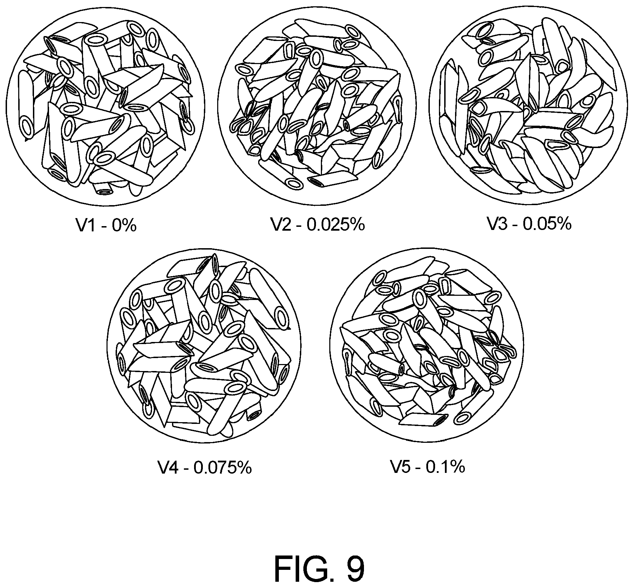

### As FIGS. 7-9 demonstrate and

TABLE **5** summarizes, there were substantial differences in the appearance and overall quality of the samples. As the amount of acid increased, the pasta presented a brighter color, could break apart more easily, and had a better *al dente* texture. The differences in color were most evident during the day of production, though the differences in all the aforementioned attributes were still detected. The minimum concentration at which the benefits of the acidified blanching could be discerned was identified to be 0.05% w/w citric acid.

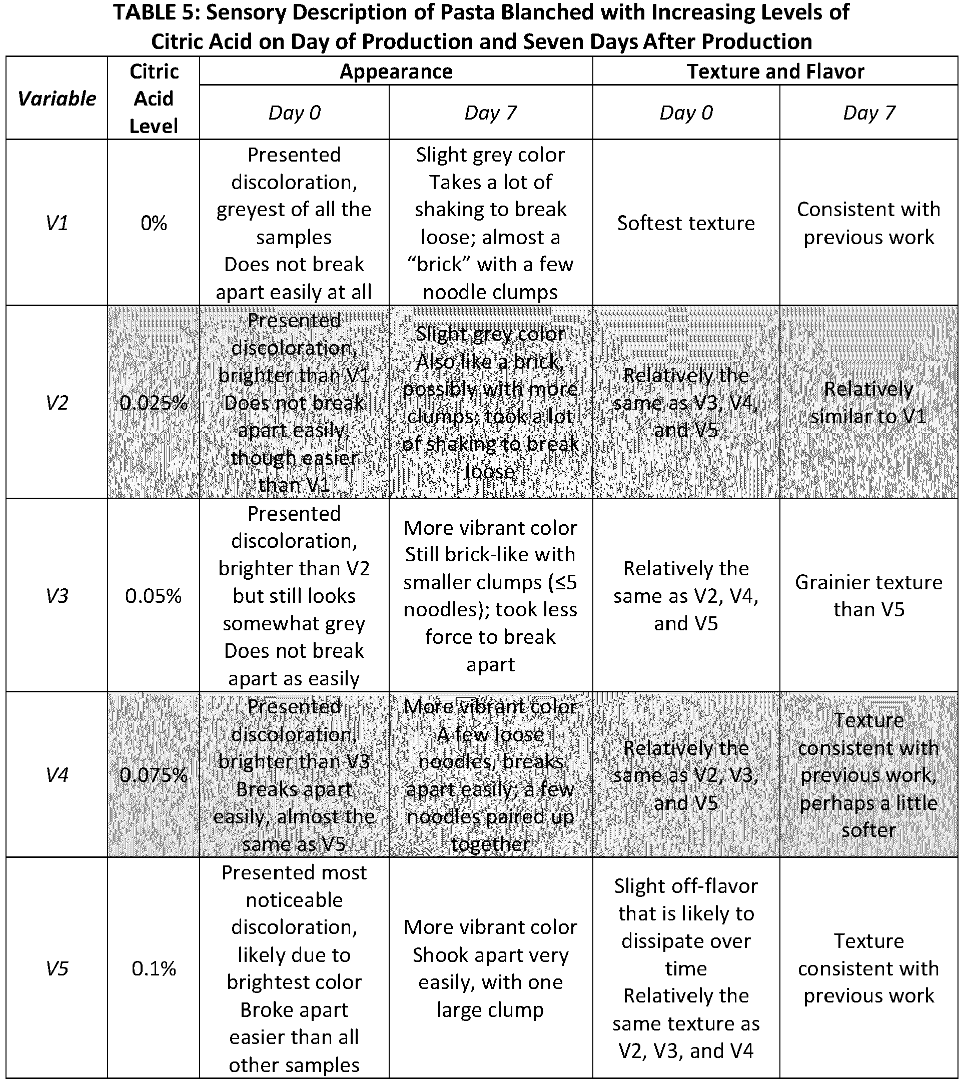

Analytical measurements (as shown in
TABLE **6** and
**TABLE 7**) were conducted to better understand some of the changes generated by the slight increase in concentration of citric acid in the blanching water. Consistently with previous observations, the increase in the amount of acid in the blanching water when all other conditions were kept the same impacted the rate of hydration of the pasta. That is to say, the higher the amount of acid in the blanching water, the lower the rate of hydration observed. This is likely due to the proposed mechanism previously described herein (see section above on Acidified Blanching). Titratable acidity of the blanched pasta increased along with the amount of acid present in the blanching water, whereas the pH decreased slightly.

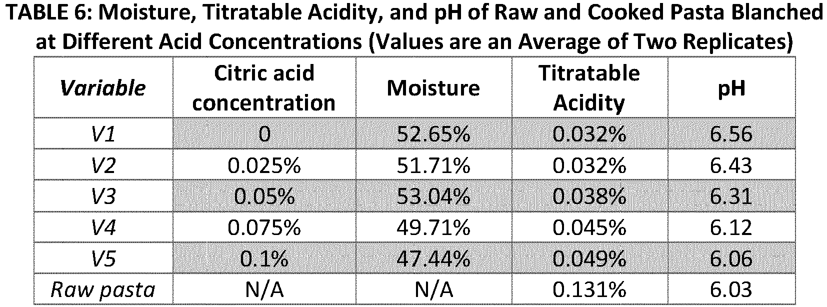

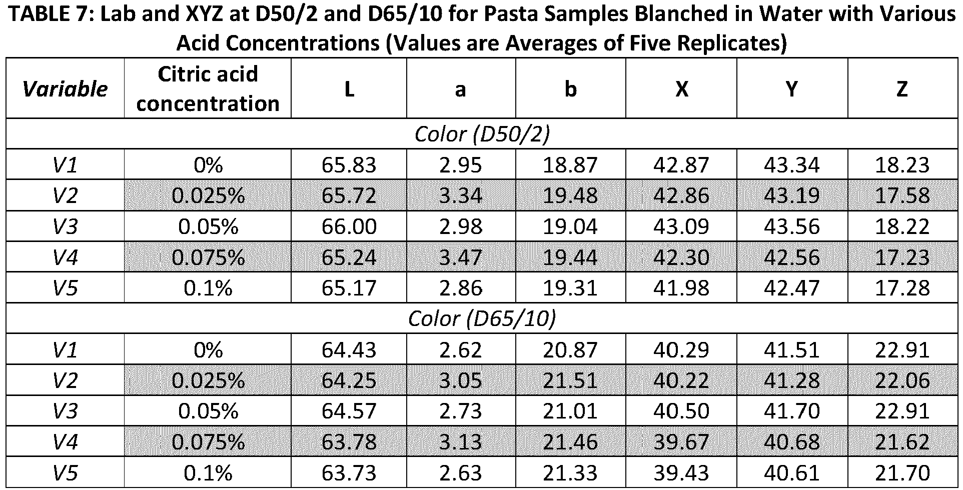

The data presented in
TABLE 7 show that at both the D50/2 and D65/10 illumination levels, there was a slight increase in the "b" value (related to more yellow, less blue) with the increase in acid in the blanching water (definitions of parameters were acquired from a presentation shared by HunterLab, "The Basics of Color Perception and Measurement"). The "L" value (degree of lightness) and the "a" value (degree of redness or greenness) did not consistently increase or decrease depending on the acid level. The "X," "Y," and "Z" values, on the other hand, all presented a noticeable decrease with the increasing levels of acid. Statistical analysis of the data shows a negative correlation between acid content and the "L" value (-0.774), the "X" value (-0.801), the "Y" value (-0.774), and the "Z" value (-0.725) for the D50/2 illumination level. The results were similar for the D65/10 illumination level, showing a negative correlation between acid content and the "L" value (-0.778), the "X" value (-0.796), the "Y" value (-0.774), and the "Z" value (-0.714). The interpretation of these results is difficult, as they do not correspond to what has been consistently observed with regard to a higher level of acid increasing the brightness and vibrancy of the color in the pasta. It is possible that the small shape of the pasta compounded with the ridges present therein generated convoluted results. It is therefore suggested that the same test be run with either long sheets of pasta with minimal rugosity to generate a more accurate reading with the colorimeter.

### Filled Pasta:

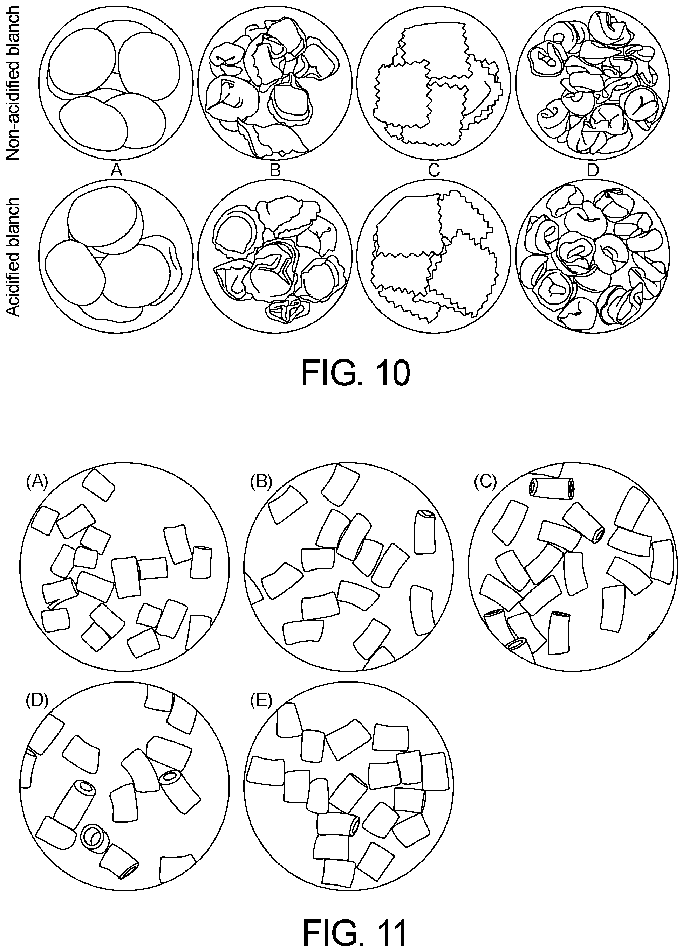

The application of the inventive method to filled pastas is of great interest (FIG. 10), although limitations to the shape and size of the pasta must be taken into account. Larger pastas tend to clump together, particularly if the surface tends to be flat (such as a ravioli). Pastas with a more complex/irregular shape (such as tortellini) tend to withstand the process better, showing considerably less clumping. While the process is effective, it may be desired to utilize filled pastas with a more complex shape to minimize clumping.

### Vegetable Pasta:

The samples produced utilizing the inventive method for unfilled vegetable pasta presented acceptable quality properties as related to texture, flavor, and appearance (FIG. 11). The final pH values ranged from 5.38 - 5.85. Differences between the pastas were attributed to the differences in their composition (TABLE 11), with the squash pasta being the softest and the green vegetable pasta being the hardest. Importantly, these vegetable pastas tended to have a harder and more brittle texture than the Barilla mini penne samples produced under similar conditions.

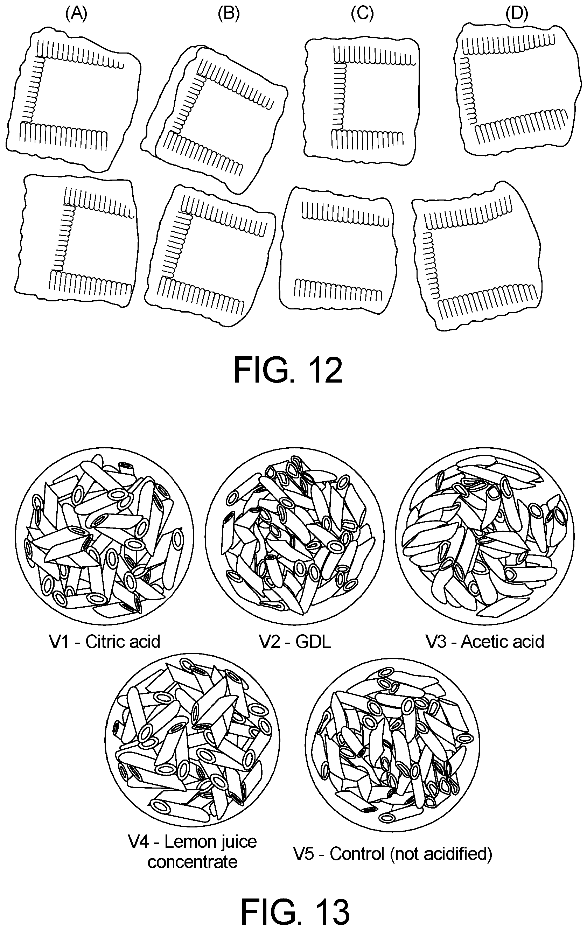

Similar to the unfilled vegetable pastas, the filled vegetable pastas were considered to be a good fit for the process (FIG. 12 and Tables 13 and 14), though in this case the texture tended to be softer than the Barilla mini penne samples processed under similar conditions.

### Acidulant Types:

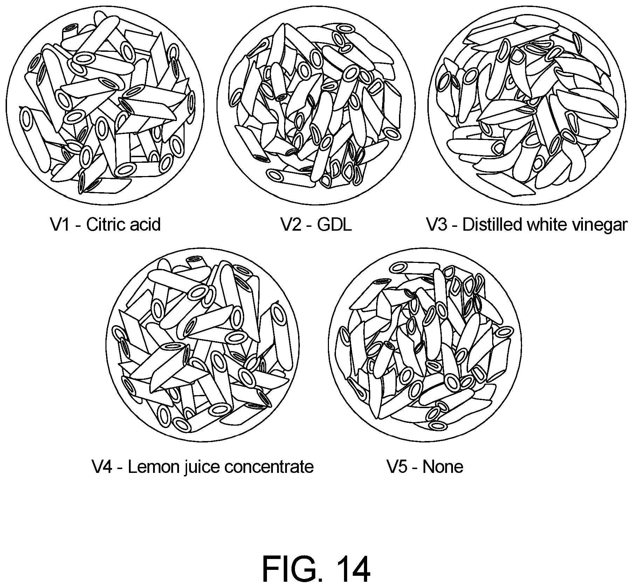

To fully assess the capabilities of the proposed process, it was of interest to replicate the impact of blanching in acidified water implementing different acidulant types. Table 9 and FIGS. 13 and 14 summarize the results of substituting citric acid used in the acidified blanching water with glucono delta-lactone (GDL), acetic acid, distilled white vinegar, and/or lemon juice concentrate to pH 4 (with no acid as a control).

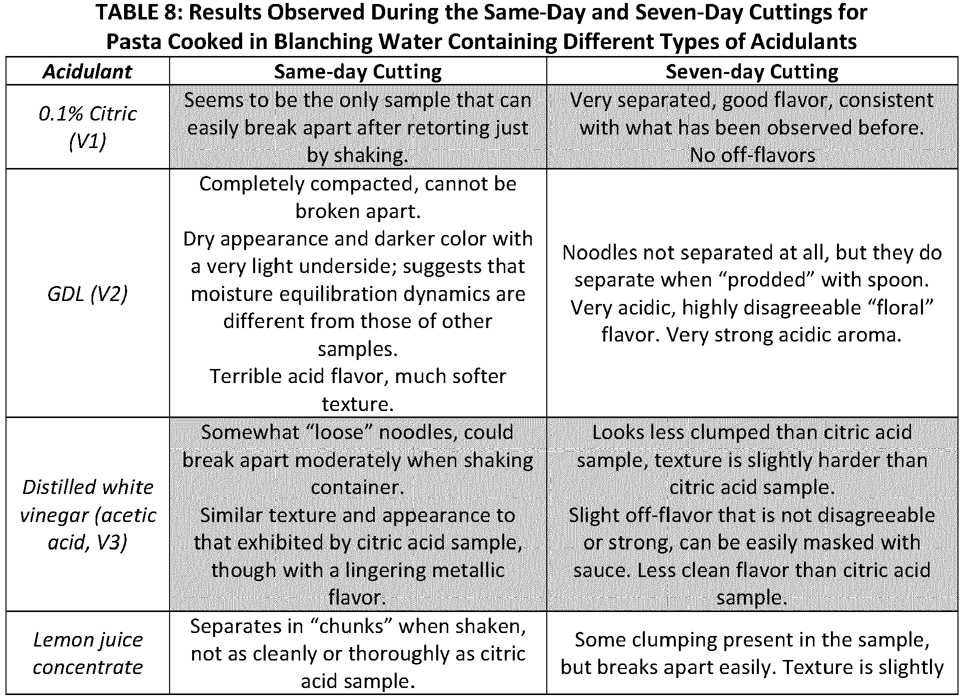

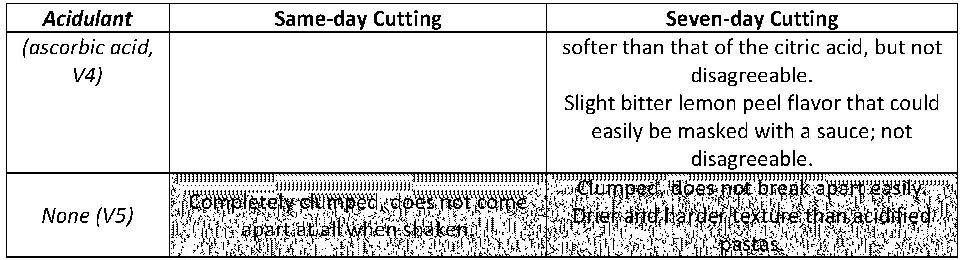

Overall, the results show that the implementation of the inventive method using either distilled white vinegar or lemon juice concentrate to acidify the blanching water is feasible to obtain pasta with minimized clumping, a brighter color, and a more *al dente* texture. However, the final properties of the pasta were not identical to those samples prepared using citric acid (although still greatly improved over the properties of pasta produced by the prior art methods).

The methods described herein differ from the prior art methods because the inventive method: (i) does not rely on the full acidification of pasta (pH ≤ 4.5) through the addition of acidulants to the pasta formulation or/and acidified blanching and/or acidified rinsing to garner the benefits of a gentler thermal process; (ii) does not employ the use of enzymes; and/or (iii) does not incorporate stabilizing agents in the pasta formulation to increase its resistance to thermal processing. Rather, the inventive method is the physicochemical changes brought about by the presence of low (0.05-0.3%) levels of a weak acid (such as, but not limited to, citric acid) in the blanching medium of pasta. These modifications are believed to strengthen the protein network of the pasta matrix, making the pasta considerably more resilient to thermal processing: the texture remains *al dente,* the color is enhanced and protected, no off-flavors are perceived in the final product, and clumping and matting are minimized (note that the removal of excess starch from the surface of the pasta after blanching, as well as coating with 2% oil after sealing, are also determining factors in the prevention of clumping and matting). These results have been shown to be applicable to cheese-filled pasta, pasta with and without egg and with a high level of vegetables in the formulation, and a myriad of pasta shapes (note that not all work done to test pasta shapes is included in this report). Other acidulants such as (but not limited to) lemon juice concentrate and distilled white vinegar have also shown favorable results. A summary of the range and optimized values for key parameters are provided in Table 10.

While the thermal process of the methods described herein consistently targeted F₀=4, a wide array of settings were tested to better understand the impact of spray vs. immersion and static vs. rotational retorting. Overall, it was found that the method generated the best results when the product was retorted using water spray as a heating medium and a rotational speed of 0 - 6 rpm (although these conditions are non-limiting to the scope of the present disclosure, and other methods disclosed herein also fall within the scope of the present disclosure). Speeds of 10 rpm or higher generated pasta with a less desired appearance, typically forming "knots" or being spread along the walls of the package and lid stock.

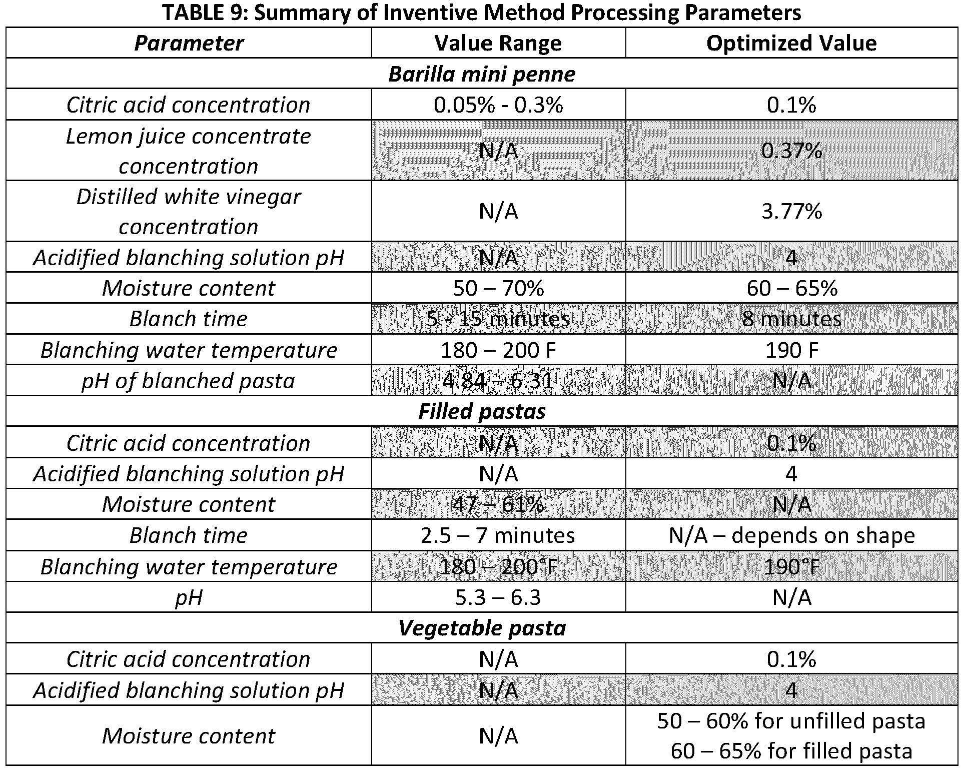

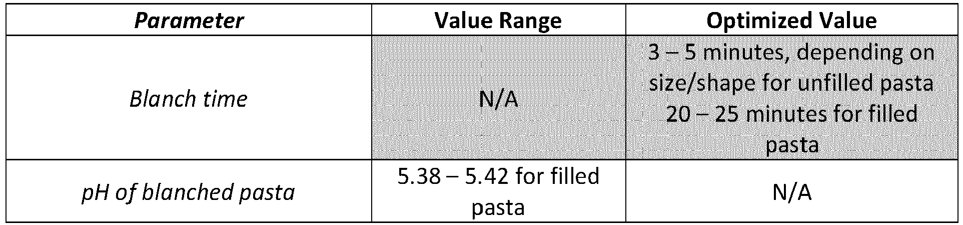

Throughout the execution of the numerous benchtop and pilot plant trials described in this Example, both benefits and safeguards for the implementation of this method were identified. These benefits and safeguards as outlined in Table 11.

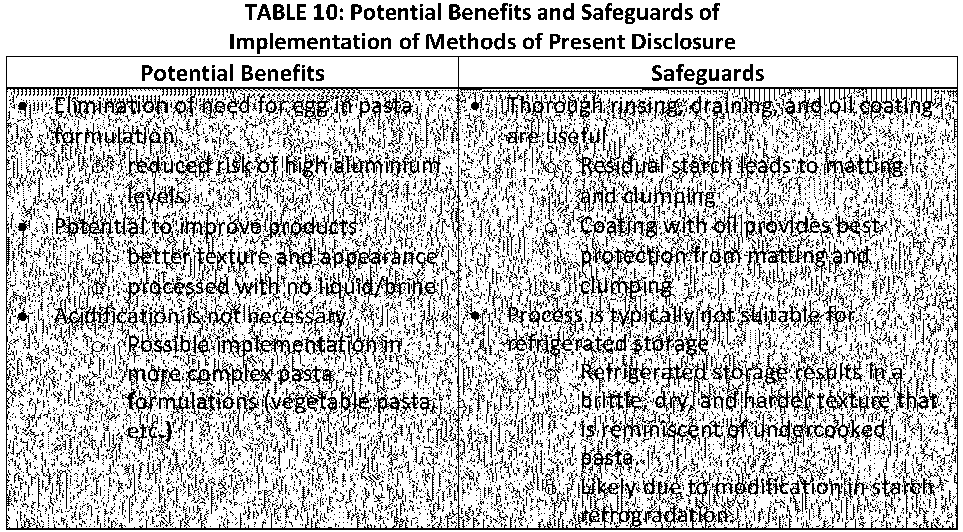

### APPENDICES FOR THE EXAMPLE

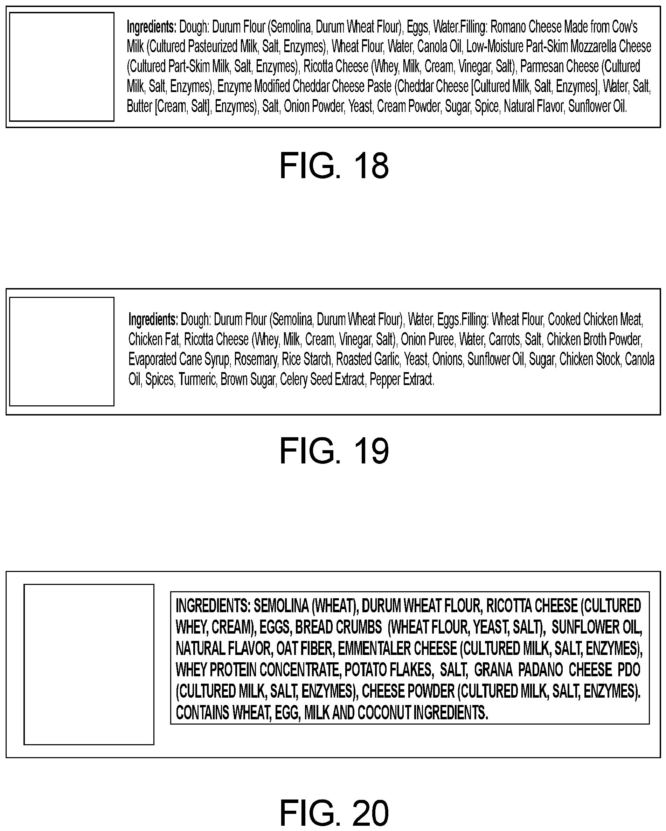

FIGS. 15-20 contain ingredient labels and product images for various commercial products, as follows. FIG. 15: Barilla mini penne pasta; FIG. 16: Great Value frozen mini cheese ravioli; FIG. 17: Great Value frozen cheese tortellini; FIG. 18: Buitoni fresh mini ravioli; FIG. 19: Buitoni fresh mini cheese tortellini; and FIG. 20: Barilla three cheese tortellini.

Vegetable Pasta Compositions are listed in Tables 12-14.

Table 15 lists the various executed trials related to the Examples described herein above for methods of optimization of ready-to-eat pasta.

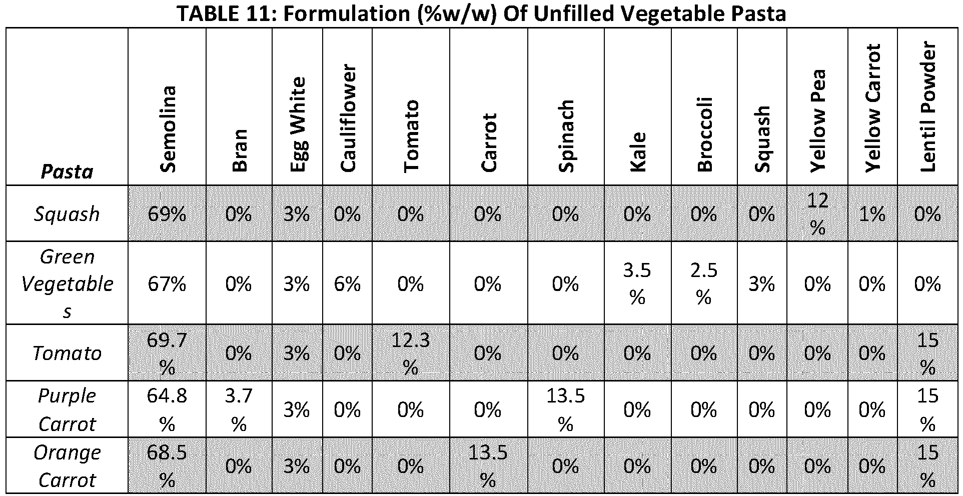

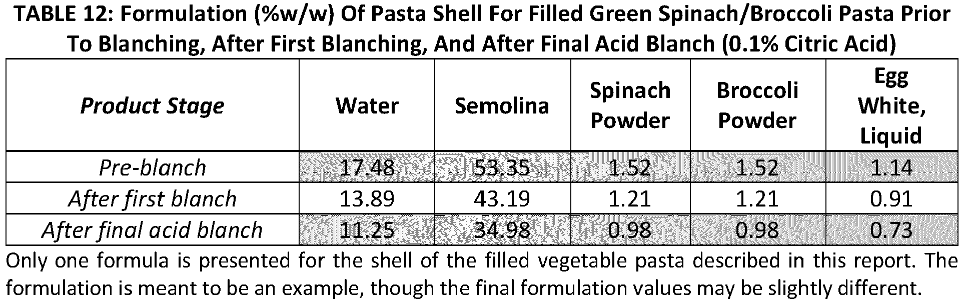

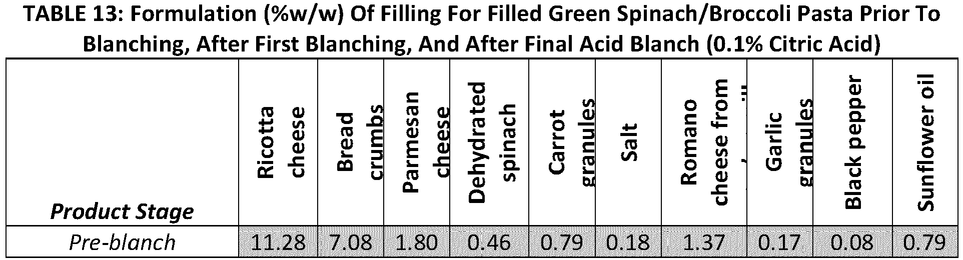

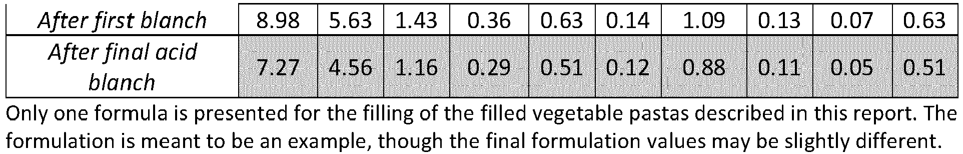

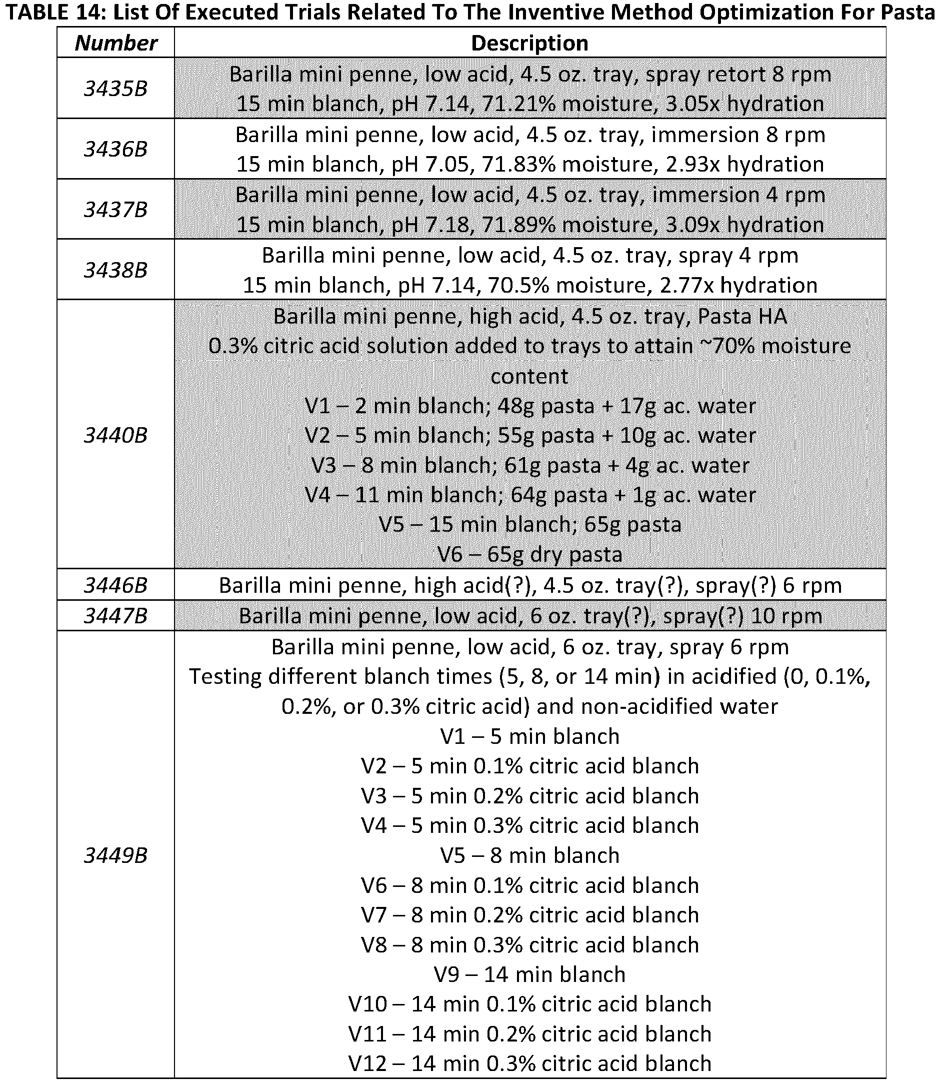

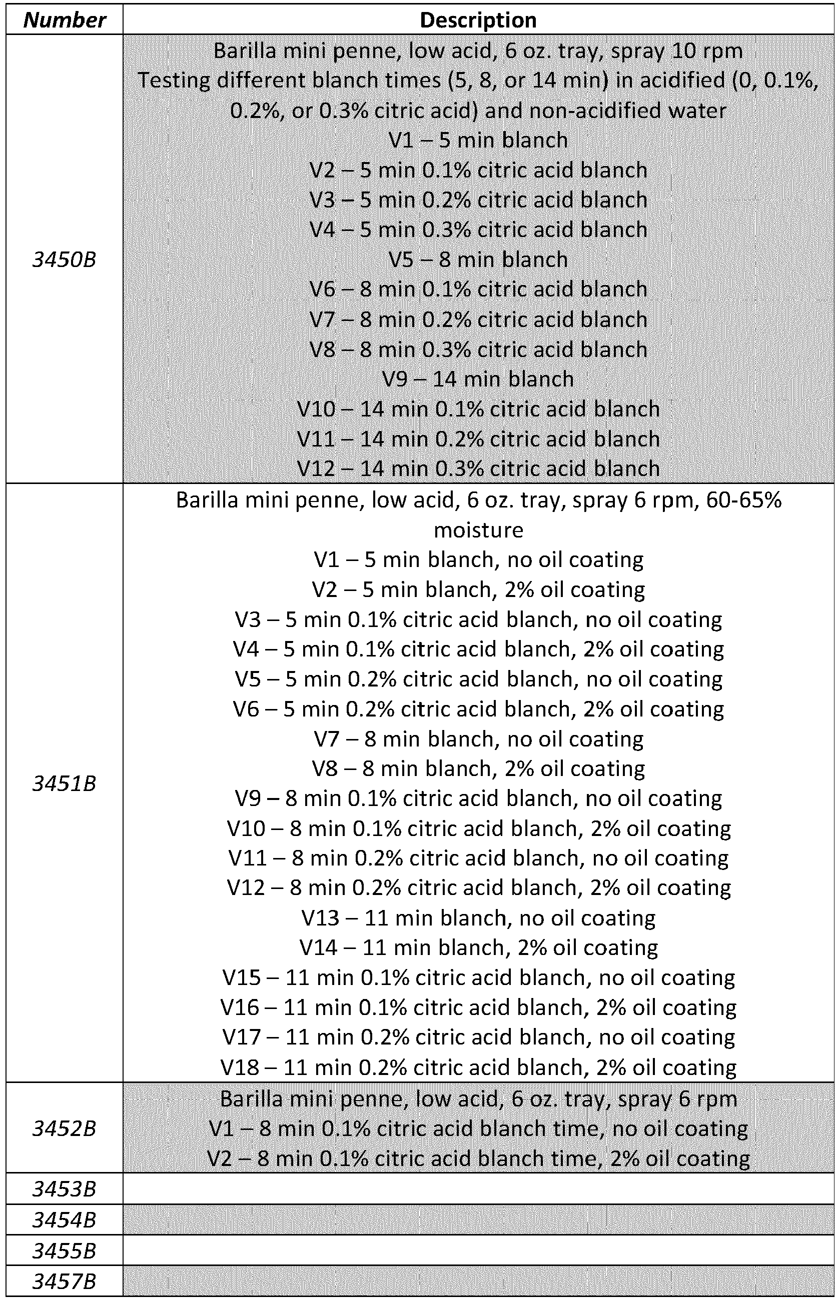

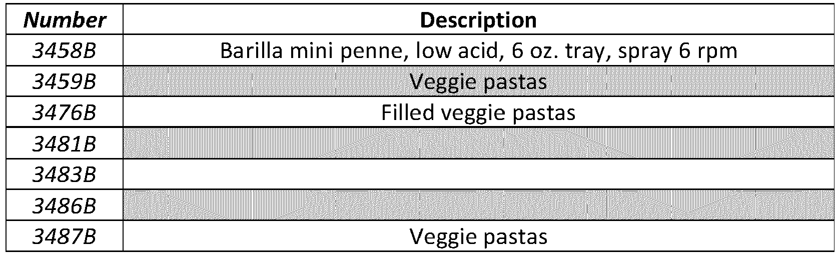

## Claims

1. A method of making a shelf stable pasta product comprising the steps of:
A) blanching a pasta in acidified water;
B) draining the pasta;
C) rinsing the pasta;
D) cooling the pasta;
E) packaging the pasta in a sealed container; and
F) thermal processing the sealed container containing the pasta; and.
with the proviso that the pasta product does not have a pH ≤ 4.5; and wherein the acidified water uses acids at concentration of at least 0.05 % w/w and is selected from the group comprising lemon juice, lemon juice concentrate, distilled vinegar, acetic acid, or combinations thereof; and wherein the pasta contains no added acidulants, no added stabilizers, no added enzymes.

2. The method of claim 1, wherein the pasta product contains no or minimal sauce or liquid.

3. The method of any one of claims 1-2, wherein the pasta comprises a filled pasta or wherein the pasta comprises at least one of: Semolina pasta, Durum past, vegetable pasta, or combinations thereof.

4. The method of any one of claims 1-3, wherein the pasta contains no egg white.

5. The method of any one of claims 1-4, wherein the acidified water has a pH of 4.

6. The method of any one of claims 1-5, wherein the blanching occurs for 2.5 to 25 minutes; and wherein the blanching occurs at a temperature in a range of from 180°F (82.2°C) to 200°F (93.3°C).

7. The method of any one of claims 1-6, further comprising a second blanching using acidified water.

8. The method of any one of claims 1-7, wherein step (D) is further defined as comprising the step of:
a) submerging the pasta in a cold water bath; and
b) removing the pasta from the cold water bath and allowing excess water to drain off.

9. The method of any one of claims 1-8, wherein the thermal processing step further comprises as the use of additional heat and/or energy source(s) selected from the group comprising microwave, radiofrequency, acoustic, other similar advanced heat and/or energy producing technologies, or combinations thereof.

10. The method of any one of claims 1-9, further comprising, after the cooling step, coating the pasta with oil.

11. The method of any one of claims 1-10, wherein the packaging step further comprises flushing a package with an inert gas prior to sealing.

12. The method of any one of claims 1-11, further comprises a freezing step prior to the packaging step to freeze the pasta.

13. The method of any one of claims 1-12, wherein the pasta is more resilient to thermal processing, wherein the more resilient is defined as at least one of:
more resistant to clumping of the pasta, more resistant to excess starchiness of the pasta, more resistant to matting of the pasta, more resistant to discoloration of the pasta, more resistant to loss of texture of the pasta, compared to shelf-stable, ready-to-eat pasta packaged in brine and having a pH less than or equal to 4.5.

14. The method of any one of claims 1-13, further comprising, after the packaging step,
a) a resting step of at least 7 days; and
b) a consuming step, wherein the pasta product is consumed by a human or animal.

15. A product, comprising:
a sealed container having a shelf-stable, ready-to-eat pasta disposed therein,
wherein the pasta is made by the method selected from group consisting of those claimed in any one of claims 1-14,
wherein the pasta has a pH above 4.5, and
wherein the pasta has been drained of excess moisture; and
wherein the container is substantially free of added liquid.

## Patentansprüche

1. Verfahren zum Herstellen eines haltbaren Teigwarenprodukts, umfassend die Schritte:
A) Blanchieren von Teigwaren in angesäuertem Wasser;
B) Abgießen der Teigwaren;
C) Abspülen der Teigwaren;
D) Abkühlen der Teigwaren;
E) Verpacken der Teigwaren in einem versiegelten Behälter; und
F) Wärmebehandeln des versiegelten Behälters, der die Teigwaren enthält; und
mit der Maßgabe, dass das Teigwarenprodukt keinen pH-Wert ≤ 4,5 aufweist; und wobei das angesäuerte Wasser Säuren in einer Konzentration von mindestens 0,05 Gew.-% verwendet und aus der Gruppe ausgewählt ist, umfassend Zitronensaft, Zitronensaftkonzentrat, destillierten Essig, Essigsäure oder Kombinationen davon; und wobei die Teigwaren keine zugesetzten Säuerungsmittel, keine zugesetzten Stabilisatoren und keine zugesetzten Enzyme enthalten.

2. Verfahren nach Anspruch 1, wobei das Teigwarenprodukt keine oder nur minimale Soße oder Flüssigkeit enthält.

3. Verfahren nach einem der Ansprüche 1 bis 2, wobei die Teigwaren gefüllte Teigwaren umfassen oder wobei die Teigwaren mindestens eines umfassen von: Grießteigwaren, Hartweizenteigwaren, Gemüseteigwaren oder Kombinationen davon.

4. Verfahren nach einem der Ansprüche 1 bis 3, wobei die Teigwaren kein Eiweiß enthalten.

5. Verfahren nach einem der Ansprüche 1 bis 4, wobei das angesäuerte Wasser einen pH-Wert von 4 aufweist.

6. Verfahren nach einem der Ansprüche 1 bis 5, wobei das Blanchieren 2,5 bis 25 Minuten lang erfolgt; und wobei das Blanchieren bei einer Temperatur in einem Bereich von 180 °F (82,2 °C) bis 200 °F (93,3 °C) erfolgt.

7. Verfahren nach einem der Ansprüche 1 bis 6, ferner umfassend ein zweites Blanchieren unter Verwendung von angesäuertem Wasser.

8. Verfahren nach einem der Ansprüche 1 bis 7, wobei Schritt (D) ferner definiert ist als umfassend den Schritt:
a) Eintauchen der Teigwaren in ein kaltes Wasserbad; und
b) Entfernen der Teigwaren aus dem kalten Wasserbad und Erlauben eines Abtropfens des überschüssigen Wassers.

9. Verfahren nach einem der Ansprüche 1 bis 8, wobei der Wärmeverarbeitungsschritt ferner die Verwendung von einer zusätzlichen Wärme- und/oder Energiequelle/zusätzlicher Wärme- und/oder Energiequellen umfasst, die aus der Gruppe ausgewählt ist/sind, umfassend Mikrowelle, Radiofrequenz, Akustik, andere ähnliche fortschrittliche Wärme- und/oder energieproduzierende Technologien oder Kombinationen davon.

10. Verfahren nach einem der Ansprüche 1 bis 9, ferner umfassend, nach dem Abkühlschritt, ein Beschichten der Teigwaren mit Öl.

11. Verfahren nach einem der Ansprüche 1 bis 10, wobei der Verpackungsschritt ferner ein Spülen einer Verpackung mit einem Inertgas vor einem Versiegeln umfasst.

12. Verfahren nach einem der Ansprüche 1 bis 11, das ferner einen Gefrierschritt vor dem Verpackungsschritt umfasst, um die Teigwaren einzufrieren.

13. Verfahren nach einem der Ansprüche 1 bis 12, wobei die Teigwaren widerstandsfähiger gegenüber dem Wärmebehandeln sind, wobei das "widerstandsfähiger" definiert ist als mindestens eines von: widerstandsfähiger gegen Verklumpen der Teigwaren, widerstandsfähiger gegen übermäßige Stärkehaltigkeit der Teigwaren, widerstandsfähiger gegen Mattieren der Teigwaren, widerstandsfähiger gegen Verfärbung der Teigwaren, widerstandsfähiger gegen Texturverlust der Teigwaren, verglichen mit haltbaren, verzehrfertigen Teigwaren, die in Salzlake verpackt sind und einen pH-Wert von kleiner als oder gleich 4,5 aufweisen.

14. Verfahren nach einem der Ansprüche 1 bis 13, ferner umfassend, nach dem Verpackungsschritt,
a) einen Ruheschritt von mindestens 7 Tagen; und
b) einen Verzehrschritt, wobei das Teigwarenprodukt von einem Menschen oder einem Tier verzehrt wird.

15. Produkt, umfassend:
einen versiegelten Behälter, der haltbare, verzehrfertige Teigwaren darin angeordnet aufweist,
wobei die Teigwaren durch ein Verfahren hergestellt werden, das aus der Gruppe ausgewählt ist, bestehend aus jenen, die in einem der Ansprüche 1 bis 14 beansprucht werden,
wobei die Teigwaren einen pH-Wert über 4,5 aufweisen und
wobei überschüssige Feuchtigkeit von den Teigwaren abgegossen wurde; und
wobei der Behälter im Wesentlichen frei von zugesetzter Flüssigkeit ist.

## Revendications

1. Procédé de fabrication d'un produit de pâtes à longue durée de conservation comprenant les étapes consistant à :
A) blanchir des pâtes dans de l'eau acidifiée ;
B) égoutter les pâtes ;
C) rincer les pâtes ;
D) refroidir les pâtes ;
E) conditionner les pâtes dans un récipient étanche ; et
F) traiter thermiquement le récipient étanche contenant les pâtes ; et.
à condition que le produit de pâtes n'ait pas un pH ≤ 4,5 ; et dans lequel l'eau acidifiée utilise des acides à une concentration d'au moins 0,05 % en poids et est choisie dans le groupe comprenant jus de citron, concentré de jus de citron, vinaigre d'alcool, acide acétique, ou combinaisons de ceux-ci ; et dans lequel les pâtes ne contiennent aucun acidulant ajouté, aucun stabilisateur ajouté, aucune enzyme ajoutée.

2. Procédé selon la revendication 1, dans lequel le produit de pâtes une quantité nulle ou minimale de sauce ou de liquide.

3. Procédé selon l'une quelconque des revendications 1 à 2, dans lequel les pâtes comprennent des pâtes farcies ou dans lequel les pâtes comprennent au moins l'une parmi : pâtes à la semoule, pâtes au blé dur, pâtes aux légumes, ou combinaisons de celles-ci.

4. Procédé selon l'une quelconque des revendications 1 à 3, dans lequel les pâtes ne contiennent pas de blanc d'oeuf.

5. Procédé selon l'une quelconque des revendications 1 à 4, dans lequel l'eau acidifiée a un pH de 4.

6. Procédé selon l'une quelconque des revendications 1 à 5, dans lequel le blanchissement se produit pendant 2,5 à 25 minutes ; et dans lequel le blanchissement se produit à une température dans une plage allant de 180 °F (82,2 °C) à 200 °F (93,3 °C).

7. Procédé selon l'une quelconque des revendications 1 à 6, comprenant en outre un second blanchissement à l'aide d'eau acidifiée.

8. Procédé selon l'une quelconque des revendications 1 à 7, dans lequel l'étape (D) est en outre définie comme comprenant l'étape consistant à :
a) immerger les pâtes dans un bain d'eau froide ; et
b) retirer les pâtes du bain d'eau froide et laisser s'égoutter l'eau en excès.

9. Procédé selon l'une quelconque des revendications 1 à 8, dans lequel l'étape de traitement thermique comprend en outre l'utilisation de source(s) de chaleur et/ou d'énergie supplémentaire(s) choisie(s) dans le groupe comprenant micro-ondes, radiofréquence, acoustique, d'autres technologies avancées similaires de production de chaleur et/ou d'énergie, ou des combinaisons de ceux-ci.

10. Procédé selon l'une quelconque des revendications 1 à 9, comprenant en outre, après l'étape de refroidissement, l'enrobage des pâtes avec de l'huile.

11. Procédé selon l'une quelconque des revendications 1 à 10, dans lequel l'étape de conditionnement comprend en outre le rinçage d'un conditionnement avec un gaz inerte avant étanchéification.

12. Procédé selon l'une quelconque des revendications 1 à 11, comprend en outre une étape de congélation avant l'étape de conditionnement pour congeler les pâtes.

13. Procédé selon l'une quelconque des revendications 1 à 12, dans lequel les pâtes sont plus résilientes à un traitement thermique, dans lequel le terme plus résilient est défini comme au moins l'un parmi : plus résistant à une agglomération des pâtes, plus résistant à un excès de féculence des pâtes, plus résistant à un matage des pâtes, plus résistant à une décoloration des pâtes, plus résistant à une perte de texture des pâtes, par comparaison avec des pâtes prêtes à consommer à longue durée de conservation conditionnées dans de la saumure et ayant un pH inférieur ou égal à 4,5.

14. Procédé selon l'une quelconque des revendications 1 à 13, comprenant en outre, après l'étape de conditionnement,
a) une étape de repos d'au moins 7 jours ; et
b) une étape de consommation, dans lequel le produit de pâtes est consommé par un humain ou un animal.

15. Produit, comprenant :
un récipient étanche ayant des pâtes prêtes à consommer à longue durée de conservation, disposées à l'intérieur de celui-ci,
dans lequel les pâtes sont fabriquées par le procédé choisi dans le groupe constitué par ceux revendiqués dans l'une quelconque des revendications 1 à 14,
dans lequel les pâtes ont un pH supérieur à 4,5, et
dans lequel les pâtes ont été égouttées de l'humidité en excès ; et
dans lequel le récipient est sensiblement dépourvu de liquide ajouté.
